# EUROPEAN PATENT SPECIFICATION

(11) **EP 4 149 154 B1**
(45) Date of publication and mention of the grant of the patent: **01.01.2025**
(21) Application number: 21799933.3
(22) Date of filing: 26.04.2021
(51) Int. Cl.: H04W 28/02, H04W 24/10, H04W 88/14

(54) **COMMUNICATION RELATED TO CONGESTION CONTROL**
KOMMUNIKATION IN ZUSAMMENHANG MIT ÜBERLASTUNGSSTEUERUNG
COMMUNICATION ASSOCIÉE À UNE COMMANDE D'ENCOMBREMENT

(30) Priority: 06.05.2020 KR 20200053928
(43) Date of publication of application: 15.03.2023
(73) Proprietor: LG Electronics, Inc., Yeongdeungpo-gu Seoul 07336 (KR)
(72) Inventor: KIM, Laeyoung, Seoul 06772 (KR); YOUN, Myungjune, Seoul 06772 (KR); KIM, Jaehyu, Seoul 06772 (KR)
(74) Representative: Maikowski & Ninnemann Patentanwälte Partnerschaft mbB
(86) International application number: PCT/KR2021/005219
(87) International publication number: WO 2021/225317

(56) References cited:
- WO-A1-2019/032968
- US-A1- 2020 100 137
- HUAWEI HISILICON: "Miscellaneous corrections/updates to TS 23.288", vol. SA WG2, no. Split, Croatia; 20191014 - 20191018, 4 October 2019 (2019-10-04), XP051801477, Retrieved from the Internet <URL:https://ftp.3gpp.org/Meetings_3GPP_SYNC/SA2/Docs/S2-1909271.zip> [retrieved on 20191004]
- "3rd Generation Partnership Project; Technical Specification Group Services and System Aspects; Architecture enhancements for 5G System (5GS) to support network data analytics services (Release 16)", vol. SA WG2, 3 September 2019 (2019-09-03), XP051776334, Retrieved from the Internet <URL:http://www.3gpp.org/ftp/tsg_sa/WG2_Arch/Latest_SA2_Specs/DRAFT_INTERIM/23288-g10_CRs_Implemented.zip> [retrieved on 20190903]
- KPN N V: "Alignment to TS 23.288 for abnormal behaviour analytics", vol. SA WG2, no. Incheon, Korea (Republic Of); 20200113 - 20200117, 7 January 2020 (2020-01-07), XP051842977, Retrieved from the Internet <URL:https://ftp.3gpp.org/tsg_sa/WG2_Arch/TSGS2_136AH_Incheon/Docs/S2-2000924.zip> [retrieved on 20200107]
- SAMSUNG: "Updated Event IDs for analytics", 3GPP DRAFT; S2-2003042, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Online Meeting ;20200420 - 20200424, 10 April 2020 (2020-04-10), Mobile Competence Centre ; 650, route des Lucioles ; F-06921 Sophia-Antipolis Cedex ; France , XP051874547
- ORANGE, HUAWEI, HISILICON, SAMSUNG: "Abnormal analytics for any UE", 3GPP DRAFT; S2-2003316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Online Meeting ;20200420 - 20200423, 24 April 2020 (2020-04-24), Mobile Competence Centre ; 650, route des Lucioles ; F-06921 Sophia-Antipolis Cedex ; France , XP051878762
- NOKIA, NOKIA SHANGHAI BELL, SAMSUNG: "Corrections to Nnwdaf service operations", 3GPP DRAFT; S2-2003339, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Online Meeting ;20200420 - 20200424, 24 April 2020 (2020-04-24), Mobile Competence Centre ; 650, route des Lucioles ; F-06921 Sophia-Antipolis Cedex ; France , XP051878785

## Description

### TECHNICAL FIELD

The present disclosure relates to mobile communication.

### Background

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Meanwhile, congestion control may be applied to communication between the terminal and the network. For example, a network node (eg, SMF, AMF, etc.) may apply congestion control when communication is congested. In this case, the network node may provide a back-off timer to the terminal to which congestion control is applied. On the other hand, the network node does not store information on the backoff timer provided by the network node. Due to this, a fairness problem may occur with respect to a terminal to which congestion control is applied. For example, the network node may continuously provide a backoff timer having a long time value to a specific terminal, and may provide a backoff timer having a short time value to other terminals. In a situation such as this example, a fairness problem between terminals may occur. When congestion control is applied, there is a need for a method for solving the fairness problem between terminals.

3GPP document S2-1909271 is a change request requesting miscellaneous corrections/updates to TS 23.288.

3GPP TS 23.288 V16.1.0 titled "3rd Generation Partnership Project; Technical Specification Group Services and System Aspects; Architecture enhancements for 5G System (5GS) to support network data analytics services (Release 16)", defines the Stage 2 architecture enhancements for 5G System to support network data analytics services in 5G Core network.

3GPP change request S2-2000924 titled "Alignment to TS 23.288 for abnormal behaviour analytics" introduces a sentence that analytics from NWDAF may also be used when congestion control is initiated by AMF or SMF.

### SUMMARY

Accordingly, a disclosure of the present specification has been made in an effort to solve the aforementioned problem. The invention is defined by the independent claims. Features of certain embodiments are defined in the dependent claims.

According to the disclosure of the present specification, it is possible to solve the problems of the related art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 is a structural diagram of a next-generation mobile communication network.
FIG. 5 is an exemplary diagram illustrating a predicted structure of a next generation mobile communication in terms of a node.
FIG. 6 is an exemplary diagram illustrating an architecture that allows the UE to simultaneously access two data networks using one PDU session.
FIG. 7 shows an example of UE data according to an embodiment of the disclosure of the present specification.
FIG. 8 shows a first example of SMCCE analytics according to an embodiment of the disclosure of the present specification.
FIG. 9 shows a second example of SMCCE analytics according to an embodiment of the disclosure of the present specification.
FIG. 10 shows an example of a procedure according to an embodiment of the disclosure of the present specification.
FIG. 11 shows an example of operation of a network according to an embodiment of the disclosure of the present specification.
FIG. 12 shows an example of operation of a terminal and a network according to an embodiment of the disclosure of the present specification.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the disclosure of the present specification

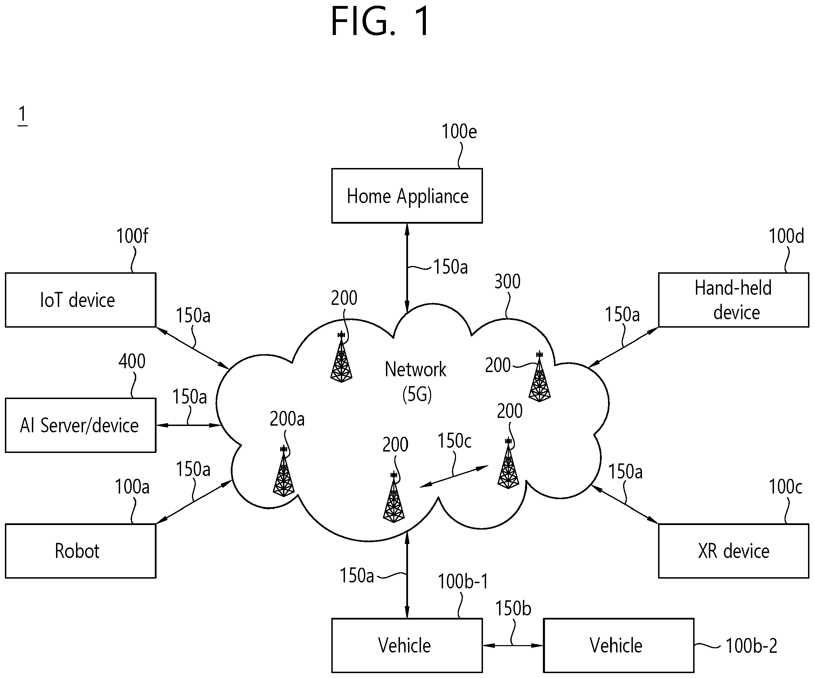

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

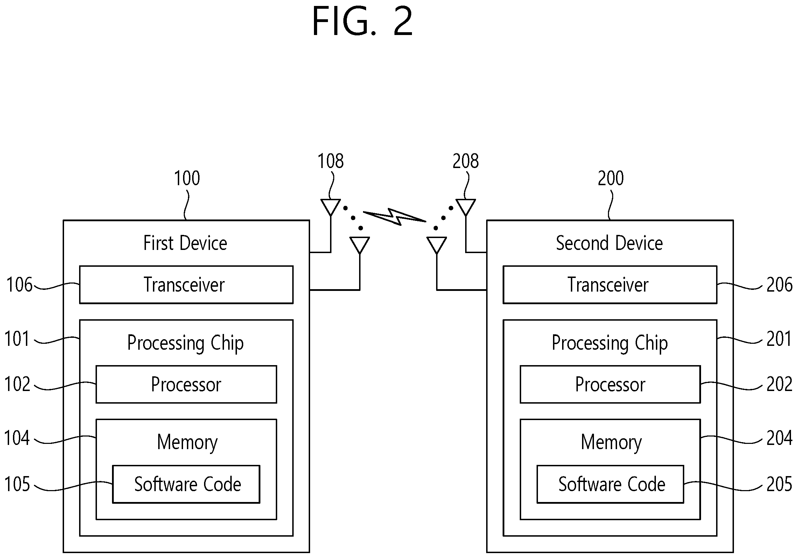

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

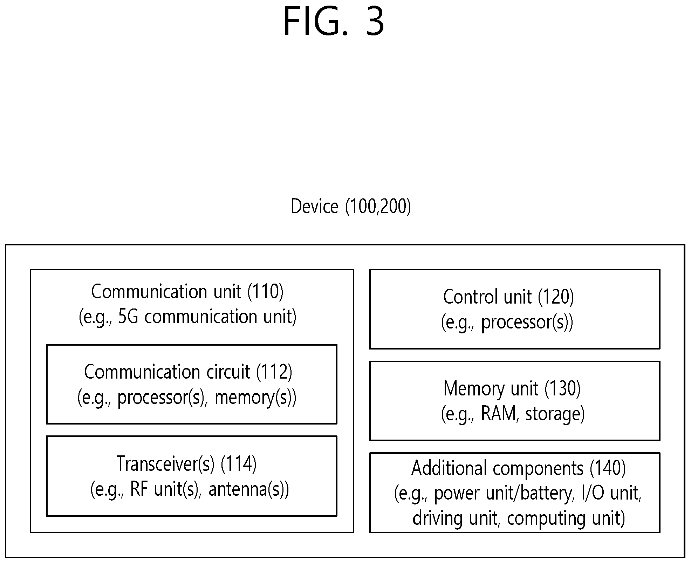

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

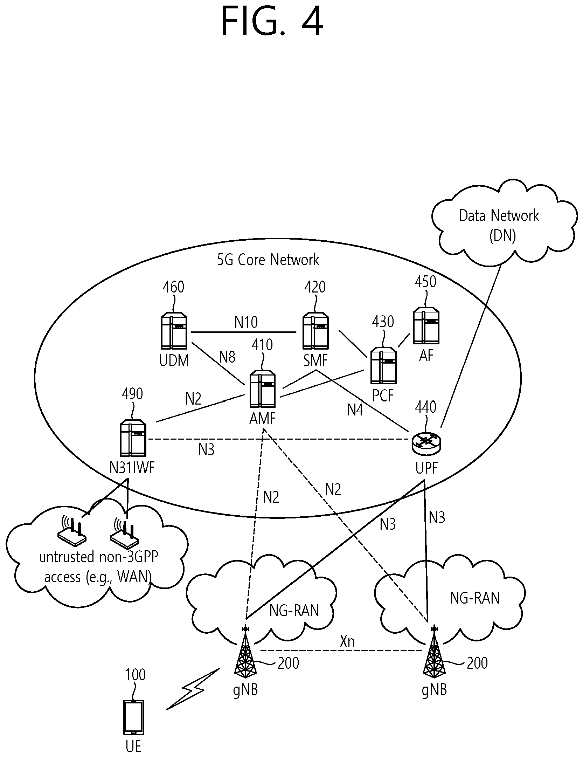

**FIG. 4** **is a structural diagram of a next-generation mobile communication network.**

5GC(5G Core) may include various components, part of which are shown in FIG. 4, including an access and mobility management function (AMF) 410, a session management function (SMF) 420, a policy control function (PCF) 430, a User Plane Function (UPF) 44, an application function (AF) 450, a unified data management (UDM) data network 460, and a non-3GPP(3rd Generation Partnership Project) interworking function (N3IWF) 490.

A UE 100 is connected to a data network via the UPF 440 through a Next Generation Radio Access Network (NG-RAN) including the gNB 20.

The UE 100 may be provided with a data service even through untrusted non-3GPP access, e.g., a wireless local area network (WLAN). In order to connect the non-3GPP access to a core network, the N3IWF 490 may be deployed.

The illustrated N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The illustrated AMF 410 may manage access and mobility in the 5G system. The AMF 410 may perform a function of managing Non-Access Stratum (NAS) security. The AMF 410 may perform a function of handling mobility in an idle state.

The illustrated UPF 440 is a type of gateway through which user data is transmitted/received. The UPF 440 may perform the entirety or a portion of a user plane function of a serving gateway (S-GW) and a packet data network gateway (P-GW) of 4G mobile communication.

The UPF 440 operates as a boundary point between a next generation radio access network (NG-RAN) and the core network and maintains a data path between the gNB 20 and the SMF 420. In addition, when the UE 100 moves over an area served by the gNB 20, the UPF 440 serves as a mobility anchor point. The UPF 440 may perform a function of handling a PDU. For mobility within the NG-RAN (which is defined after 3GPP Release-15), the UPF 440 may route packets. In addition, the UPF 540 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 44 may correspond to a termination point of a data interface toward the data network.

The illustrated PCF 430 is a node that controls an operator's policy.

The illustrated AF 450 is a server for providing various services to the UE 100.

The illustrated UDM 460 is a kind of server that manages subscriber information, such as home subscriber server (HSS) of 4G mobile communication. The UDM 460 stores and manages the subscriber information in a unified data repository (UDR).

The illustrated SMF 420 may perform a function of allocating an Internet protocol (IP) address of the UE. In addition, the SMF may control a protocol data unit (PDU) session.

For reference, hereinafter, reference numerals for AMF (410), SMF (420), PCF (430), UPF (440), AF (450), UDM (460), N3IWF (490), gNB (20), or UE (100) may be omitted.

The 5^{th} generation mobile communcation supports a plurality of numerologies (e.g. a plurality of values of subcarrier spacing (SCS)) in order to support various services. For example, when the SCS is 15 kHz, a wide area in traditional cellular bands is supported. When the SCS is 30 kHz/60 kHz, a dense-urban, lower-latency, and wider carrier bandwidth is supported. When the SCS is 60 kHz or greater, a bandwidth greater than 24.25 GHz is supported in order to overcome phase noise.

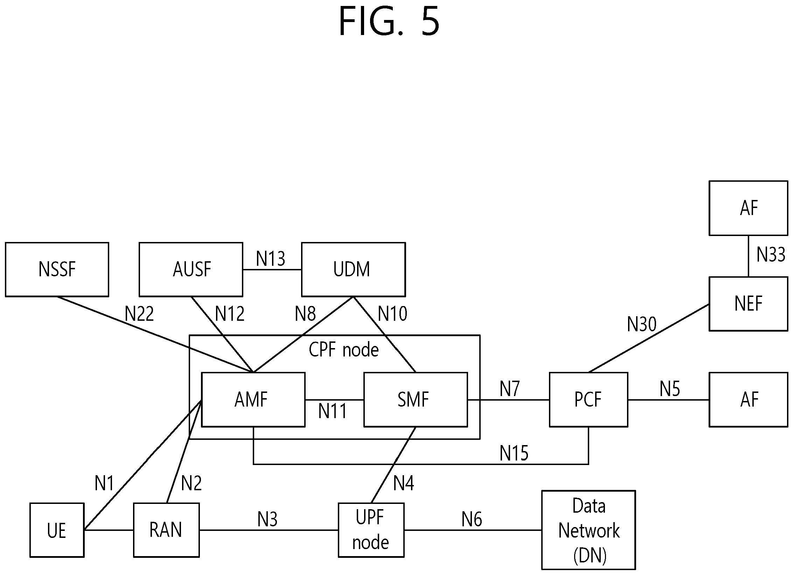

**FIG. 5** **is an exemplary diagram illustrating a predicted structure of a next generation mobile communication in terms of a node.**

Referring to FIG. 5, the UE is connected to a data network (DN) through a next generation RAN (Radio Access Network).

The Control Plane Function (CPF) node shown in FIG. 5 may perform all or part of the Mobility Management Entity (MME) function of the fourth generation mobile communication, and all or a part of the control plane function of the Serving Gateway (S-GW) and the PDN (Packet Data Network)-gateway (P-GW) of the fourth generation mobile communication. The CPF node includes an Access and Mobility Management Function (AMF) node and a Session Management Function (SMF) node.

The user plane function (UPF) node shown in the drawing is a type of a gateway over which user data is transmitted and received. The UPF node may perform all or part of the user plane functions of the S-GW and the P-GW of the fourth generation mobile communication.

The Policy Control Function (PCF) node shown in FIG. 5 is configured to control a policy of the service provider.

The illustrated Application Function (AF) node refers to a server for providing various services to the UE.

The Unified Data Management (UDM) node as shown refers to a type of a server that manages subscriber information, such as a Home Subscriber Server (HSS) of 4th generation mobile communication. The UDM node stores and manages the subscriber information in the Unified Data Repository (UDR).

The Authentication Server Function (AUSF) node as shown authenticates and manages the UE.

The Network Slice Selection Function (NSSF) node as shown refers to a node for performing network slicing as described below.

The illustrated Network Exposure Function (NEF) is a node for providing a mechanism to securely expose services and functions of the 5G core. For example, NEF exposes functions and events, securely provides information from external applications to the 3GPP network, translates internal/external information, provides control plane parameters, and manages packet flow description (PFD).

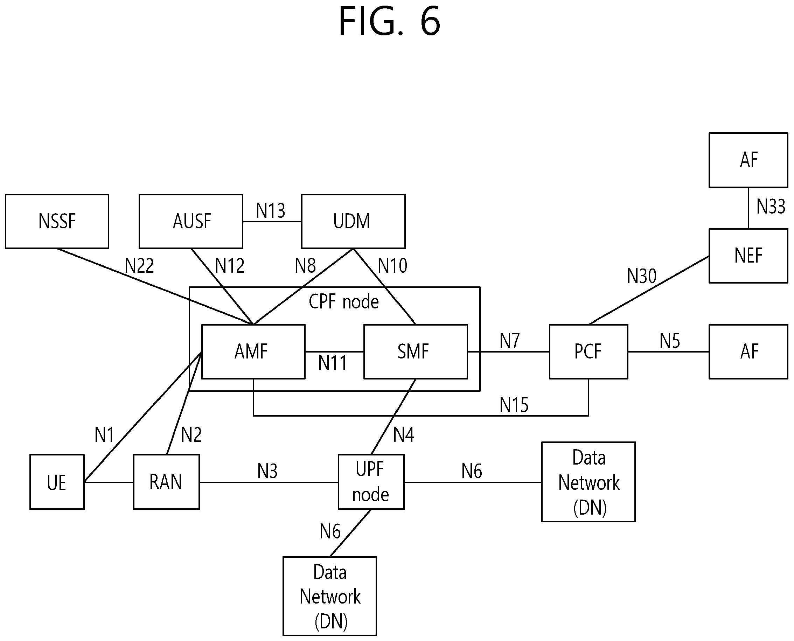

In FIG. 6, the UE may simultaneously access two data networks using multiple PDU sessions.

**FIG. 6** **is an exemplary diagram illustrating an architecture that allows the UE to simultaneously access two data networks using one PDU session.**

FIG. 6 illustrates an architecture that allows the UE to simultaneously access two data networks using one PDU session.

For reference, descriptions of the reference points shown in FIGS. 2 and 3 are as follows.

N1 represents Reference point between UE and AMF.

N2 represents Reference point between NG-RAN and AMF.

N3 represents Reference point between NG-RAN and UPF.

N4 represents Reference point between SMF and UPF.

N5 represents Reference point between PCF and AF.

N6 represents Reference point between UPF and DN.

N7 represents Reference point between SMF and PCF.

N8 represents Reference point between UDM and AMF.

N9 represents Reference point between UPFs.

N10 represents Reference point between UDM and SMF.

N11 represents Reference point between AMF and SMF.

N12 represents Reference point between AMF and AUSF.

N13 represents Reference point between UDM and AUSF.

N14 represents Reference point between AMFs.

N15 represents Reference point between PCF and AMF in a non-roaming scenario and reference point between AMF and PCF of visited network in roaming scenario.

N16 represents Reference point between SMFs.

N22 represents Reference point between AMF and NSSF.

N30 represents Reference point between PCF and NEF.

N33 represents Reference point between AF and NEF.

In FIGS. 5 and 6, AF by a third party other than an operator may be connected to SGC through a network exposure function (NEF).

### <Network data analytics>

To support an enabler for network automation, ways to improve the performance of the 5GS system are being discussed.

For 5GS system enhancement, for example, it may be necessary to further investigate system enhancement for Network Data Analytics Function (NWDAF). Through system enhancements to NWDAF, 5GS can support network automation.

Here, the NWDAF may be a network node that provides network analytics information according to a request of another network node (another NF). For example, the NWDAF may generate analytics information based on communication-related information (eg, information related to a load level of a specific network slice). The NWDAF may provide analytics information such as statistical information or prediction information to other network nodes (other NFs) in order to utilize data provided by the UE or other network nodes.

Research related to network data analytics may focus on data analytics for 5GC NF (Network Function) (eg, data analytics to support decision-making of SGC NF). Alternatively, research related to network data analytics may focus on supporting application-related analytics, UE-related analytics, and session-related analytics. In relation to network data analytics, research on inputs to NWDAF and outputs of NWDAF may be conducted. Potential improvements and new scenarios for network data analytics can be studied.

As an input for the NWDAF to generate the data analytics, data from a UE or data from a network node (eg, SMF) may be used. In order for 5GS to support NWDAF collecting and utilizing data provided from UEs (or network nodes), ways to enhance 5GS may be discussed. 5GS may be enhanced to provide the NWDAF with input information for generating analytics information. This analytics information can be used by other NFs (eg, non-NWDAF network nodes).

When a network enhancement is envisioned based on the data of the UE (or network node) provided to the NWDAF, problems such as the following examples can be studied:
- What type of information from the UE could be collected by the network (e.g. NWDAF) as input for analytics generation?
- What types of analytics information could be provided by NWDAF to other NFs to leverage the data provided by the UE?
- How frequently such data provided by the UE are to be shared with the NWDAF?
- What are the triggers for the UE to provide data to the NWDAF as input for analytics?
- How to ensure the integrity and Operator-level accessibility of UE-provided information in order to avoid using misleading or untrusted information in the network?
- Whether there are privacy aspects that need to be considered, i.e. related to the information provided by the UE? If so, how to ensure privacy on collection and utilisation of UE data?
- How the NWDAF collects the UE's information (the method of collection of data)?

The network may guarantee privacy, integrity, and operator-level accessibility of data provided by the UE.

NWDAF may provide statistics or prediction information to the UE or other NFs to utilize the data provided by it.

There may not be a direct interface between the UE and the NWDAF.

### <Congestion Control)>

In 5G communication, congestion control may be used. For example, congestion control related to Session Management (SM) used in 5GS is defined as the following example. Hereinafter, an example of congestion control based on Data Network Name (DNN) and Single-Network Slice Selection Assistance Information (S-NSSAI) based congestion control will be described.

First, DNN based congestion control will be described.

Regardless of the presence or absence of S-NSSAI, DNN-based congestion control is designed to prevent and handle NAS SM signaling congestion for a UE with a back-off timer associated with the DNN (or a UE without a back-off timer associated with the DNN). Both the UE and SGC must support a function that enables DNN-based congestion control.

The SMF may apply the DNN-based congestion control to the UE by rejecting the PDU session establishment request message or the PDU session modification request message. Exceptionally, the SMF may not reject a message transmitted to report a 3GPP Packet Switch (PS) Data Off state change for a specific DNN in which the back-off timer is running.

The SMF may release the PDU session belonging to the congested DNN by sending a PDU session release command message to the UE together with the DNN back-off timer. If the DNN back-off timer value is set in the PDU session release command message, the cause value is not set to "reactivation requested".

When DNN-based congestion control is activated(e.g. DNN-based congestion control is set by OAM) in AMF, AMF may provide a NAS Transport Error message for a NAS Transport message that carries a Session Management (SM) message, and may include a DNN back-off timer in the NAS transport error message.

The UE may associate the received back-off timer value with the DNN (eg, no DNN, DNN only) included in the uplink NAS Mobility Management (MM) message for delivering the corresponding NAS SM request message.

If the DNN associated with the back-off timer is not a Local Access Data Network (LADN) DNN, the UE may associate the received back off timer value with the DNN (ie, no DNN, only DNN) in all PLMNs. In this case, the UE associates the received back-off timer value only to the PLMN for which the back-off timer value was received.

The UE may operate as in the following example when the DNN back off timer is being excecuted (or running):
- If a DNN is associated with the back-off timer, the UE may not initiate any Session Management procedures for the congested DNN. The UE may initiate Session Management procedures for other DNNs. The UE shall not initiate any Session Management procedure for the corresponding APN when UE moves to EPS. The UE may initiate Session Management procedures for other APNs when the UE moves to EPS;
- If no DNN is associated with the back-off timer, the UE may only initiate Session Management requests of any PDU Session Type for a specific DNN;
- Upon Cell/ Tracking Area(TA)/PLMN/ Radio Access Technology(RAT) change, change of untrusted non-3GPP access network or change of Access Type, the UE shall not stop the back-off timer;
- The UE may initiate the Session Management procedures for high priority access and emergency services;
- The UE may initiate the Session Management procedure for reporting Data Off status change to the network;
- The UE may initiate a PDU session release procedure. That is, the UE may transmit a PDU session release request message. The UE may not stop the back-off timer when the associated PDU session is released;
- If the UE receives a network initiated Session Management message other than PDU Session Release Command for the congested DNN associated to a running back-off timer, the UE shall stop the back-off timer and respond to the 5GC;
- If the UE receives a PDU Session Release Command message for the congested DNN, it shall stop the back-off timer unless it receives a new back-off time from SMF;
- The UE is allowed to initiate PDU Session Release procedure (i.e. sending PDU Session Release Request message). The UE shall not stop the back-off timer when the related PDU Session is released;

If UE initiates one of the Session Management procedures that are exempted from NAS congestion control, the UE indicates that the carried NAS SM message is exempted from NAS congestion control in the UL NAS Transport message. When the DNN based congestion control is activated at AMF, if the UE indicates that the NAS SM message in the UL NAS Transport message is exempted from NAS congestion control, the AMF shall not apply DNN based congestion control on the UL NAS Transport message. And, in this case, the AMF may forward the NAS SM message to the corresponding SMF with an indication that the message was received with exemption indication. The SMF may evaluate whether the NAS SM message is allowed to be exempted from DNN based congestion control. If it is not, the SMF rejects the message, e.g. the SMF shall reject PDU Session Modification received if it is not for Data Off status reporting).

The UE may maintain a separate back-off timer for each DNN that the UE may use.

To avoid that large amounts of UEs initiate deferred requests (almost) simultaneously, the SGC should select the back-off timer value so that deferred requests are not synchronized.

If the UE required to report 5GSM Core Network Capability change, or the Always-on PDU Session Requested indication while DNN based congestion control was running and was unable to initiate SM signalling, the UE defers the related SM signalling until the DNN based congestion control timer expires. And the UE may initiate the necessary SM signalling after the expiry of the timer.

The DNN based Session Management congestion control is applicable to the NAS SM signalling initiated from the UE in the Control Plane. The Session Management congestion control does not prevent the UE from sending and receiving data or initiating Service Request procedures for activating User Plane connection towards the DNN(s) that are under Session Management congestion control.

Hereinafter, S-NSSAI based congestion control will be described.

S-NSSAI based congestion control is designed for the purpose of avoiding and handling of NAS signalling congestion for the UEs with back-off timer associated with or without an S-NSSAI regardless of the presence of a DNN.

The UE may associate the received back-off time with the S-NSSAI and DNN (i.e. no S-NSSAI and no DNN, no S-NSSAI, S-NSSAI only, an S-NSSAI and a DNN) which was included in the uplink NAS MM message. Herein, the uplink NAS MM message may be a NAS MM message carrying the corresponding NAS SM request message for the PLMN which is under congestion.

S-NSSAI based congestion control can be applied as in the following example:
- If an S-NSSAI is determined as congested, then the SMF may apply S-NSSAI based congestion control towards the UE for SM requests except for those sent for the purpose of reporting 3GPP PS Data Off status change for a specific S-NSSAI and provides a back-off time and an indication of HPLMN congestion;
- If the UE receives an S-NSSAI based back-off time without an indication of HPLMN congestion, the UE shall apply the S-NSSAI back-off timer only in the PLMN in which the back-off time was received. If the UE receives S-NSSAI based back-off time with an indication of HPLMN congestion, the UE shall apply the S-NSSAI based back-off timer in the PLMN in which the back-off time was received and in any other PLMN;
- The SMF may release PDU Sessions belonging to a congested S-NSSAI by sending a PDU Session Release Request message towards the UE with a back-off time associated either to the S-NSSAI only (i.e. with no specific DNN) or a combination of the S-NSSAI and a specific DNN;
- If S-NSSAI based congestion control is activated at AMF e.g., configured by OAM and an S-NSSAI is determined as congested, then the AMF applies S-NSSAI based congestion control towards the UE for UE-initiated Session Management requests. In this case, the AMF provides a NAS Transport Error message for the NAS Transport message carrying the SM message, and in the NAS Transport Error message it includes a back-off timer;

The UE may behave as follows in the PLMN where the S-NSSAI based congestion control applies when the back-off timer is running:
- If the back-off timer was associated with an S-NSSAI only (i.e. not associated with an S-NSSAI and a DNN), the UE may not initiate any Session Management procedures for the congested S-NSSAI;
- If the back-off timer was associated with an S-NSSAI and a DNN, then the UE may not initiate any Session Management procedures for that combination of S-NSSAI and DNN;
- If the UE receives a network-initiated Session Management message other than PDU Session Release Command for the congested S-NSSAI, the UE may stop this back-off timer and respond to the 5GC;
- If the UE receives a PDU Session Release Command message for the congested S-NSSAI, it shall stop the back-off timer unless it receives a new back-off time from SMF;
- Upon Cell/TA/PLMN/RAT change, change of untrusted non-3GPP access network or change of Access Type, the UE shall not stop the back-off timer for any S-NSSAI or any combination of S-NSSAI and DNN;
- The UE is allowed to initiate the Session Management procedures for high priority access and emergency services for the S-NSSAI;
- The UE is allowed to initiate the Session Management procedure for reporting Data Off status change for the S-NSSAI or the combination of S-NSSAI and DNN.
- -If the back-off timer is not associated to any S-NSSAI, the UE may only initiate Session Management procedures for specific S-NSSAI;
- If the back-off timer is not associated to any S-NSSAI and DNN, the UE may only initiate Session Management procedures for specific S-NSSAI and DNN;
- The UE is allowed to initiate PDU Session Release procedure (e.g. sending PDU Session Release Request message). The UE shall not stop the back-off timer when the related PDU Session is released.

The UE shall maintain a separate back-off timer for each S-NSSAI and for each combination of S-NSSAI and DNN that the UE may use.

If UE initiates one of the Session Management procedure that are exempt from NAS congestion control, the UE may indicate that the carried NAS SM message is exempted from NAS congestion control in the UL NAS Transport message. When the S-NSSAI based congestion control is activated at AMF, if the UE indicates that the NAS SM message in the UL NAS Transport message is exempted from NAS congestion control, the AMF shall not apply S-NSSAI based congestion control on the UL NAS Transport message and shall forward the NAS SM message to the corresponding SMF with an indication that the message was received with exemption indication. The SMF may evaluate whether that the NAS SM message is allowed to be exempted from S-NSSAI based congestion control. If it is not, the SMF rejects the message, e.g. the SMF may reject PDU Session Modification received if it is not for Data Off status reporting.

The back-off timer associated with an S-NSSAI or a combination of an S-NSSAI and a DNN may only be applied to congestion control for Session Management procedures when UE is in 5GS.

To avoid that large amounts of UEs initiate deferred requests (almost) simultaneously, the SGC may select the value of the back-off timer for the S-NSSAI based congestion control so that deferred requests are not synchronized.

If the UE required to report 5GSM Core Network Capability change, or the Always-on PDU Session Requested indication while S-NSSAI based congestion control timer was running and was unable to initiate SM signalling, the UE may defer the related SM signalling until the S-NSSAI based congestion control timer expires and initiates the necessary SM signalling after the expiry of the timer.

The S-NSSAI based congestion control does not prevent the UE from sending and receiving data or initiating Service Request procedure for activating User Plane connection for a PDU Session associated to the S-NSSAI that is under the congestion control.

### II. Disclosure of the present specification

The disclosures described below in this specification may be implemented in one or more combinations (eg, a combination including at least one of the contents described below). Each of the drawings shows an embodiment of each disclosure, but the embodiments of the drawings may be implemented in combination with each other.

The description of the method proposed in the disclosure of the present specification may consist of a combination of one or more operations/configurations/steps described below. The following methods described below may be performed or used in combination or complementary.

For specific examples of SM-related congestion control schemes and backoff timers related to congestion control schemes (eg, T3396 for DNN based congestion control, T3584 for the S-NSSAI based congestion control), conventional techniques (eg, TS 24.501 V15. 0.0) can be referred to.

According to the SM-related congestion control mechanism (eg DNN-based congestion control and/or S-NSSAI-based congestion control), the SMF does not store information and/or history about UEs for which the SMF provided a backoff timer. Here, the SMF may be applying an SM-related congestion control mechanism or may have applied an SM-related congestion control mechanism.

Therefore, fairness for the application of SM-related congestion control is not considered, and this fairness cannot be guaranteed. For example, among UEs using a PDU session associated with S-NSSAI #1, some UEs may experience high S-NSSAI based congestion control (eg, some UEs may receive a NAS SM reject message from the SMF containing a long back off timer value). On the other hand, some other UEs may experience low S-NSSAI based congestion control within a specific period (eg, the UE may receive a NAS SM reject message including a short back off timer value from the SMF). Since the timer value of the backoff timer received by the UE may be up to 70 hours, the backoff timer provided to each UE may be different.

As in the example described above, when SM-related congestion control is applied, a fairness problem may occur. In the disclosure of the present specification, examples of a method for solving the fairness problem are described.

For example, the disclosure herein may describe an example of how to utilize data analytics to address fairness issues. As an example, the disclosure of the present specification describes an example for solving the fairness problem by using UE data provided by the UE. As another example, the disclosure of the present specification describes an example for solving a fairness problem by using data provided by a network node (eg, SMF).

For example, the disclosure of the present specification proposes a method for supporting SM congestion control using data (eg, data analytics, UE data, and/or data provided by a network node).

A method for supporting SM congestion control proposed in the disclosure of this specification may be configured by a combination of one or more operations/configurations/steps among various examples described below.

For a description of the operation of NWDAF, enablers for network automation for the 5GS, network data analytics services, etc., refer to TS 23.288 V16.1.0.

Various examples are described in the disclosure of this specification. For example, an analytics of the SM Congestion Control Experience (SMCCE) utilizing data (eg, data analytics, UE data, and/or data provided by a network node) is described below.

According to the SM-related congestion control mechanism (eg DNN-based congestion control and/or S-NSSAI-based congestion control), the SMF does not store information and/or history about UEs for which the SMF provided a backoff timer. Here, the SMF may be applying an SM-related congestion control mechanism or may have applied an SM-related congestion control mechanism.

Therefore, fairness for the application of SM-related congestion control is not considered, and this fairness cannot be guaranteed. For example, among UEs using a PDU session associated with S-NSSAI #1, some UEs may experience high S-NSSAI based congestion control (eg, some UEs may receive a NAS SM reject message from the SMF containing a long back off timer value). On the other hand, some other UEs may experience low S-NSSAI based congestion control within a specific period (eg, the UE may receive a NAS SM reject message including a short back off timer value from the SMF). Since the timer value of the backoff timer received by the UE may be up to 70 hours, the backoff timer provided to each UE may be different.

In order to solve the same problem as the example described above, in an embodiment of the disclosure of the present specification, a new Analytics ID (Analytics ID) "Session Management Congestion Control Experience (SMCCE)" is proposed. NWDAF can use the data to analyze SMCCE. For example, the NWDAF may provide an observed (or analyzed) SMCCE analytics to a service consumer for a particular DNN and/or S-NSSAI. For example, NWDAF may provide SMCCE analytics to service consumers in the form of statistics or predictions.

For example, the service consumer may be an SMF. Alternatively, other NFs and Operations, Administration and Maintenance (OAM) may also be service consumers. The observed (or analyzed) SMCCE analytics may provide the service consumer with one or more of the following outputs:
a) A list of UEs whose experience level of Session Management Congestion Control for specific DNN and/or S-NSSAI is high;
b) A list of UEs whose experience level of Session Management Congestion Control for specific DNN and/or S-NSSAI is medium;
c) A list of UEs whose experience level of Session Management Congestion Control for specific DNN and/or S-NSSAI is low or zero.

In other words, the NWDAF may provide SMCCE analytics information including information on one or more of a) to c) described above to a service consumer (eg, SMF).

Additionally, if the service consumer is an SMF, the observed (or analyzed) SMCCE analytics may provide the SMF with an output such as the following example:
1) A list of UEs whose serving SMF reallocation is recommended. (This list may be same to a) or include UE(s) that does not belong to any of a), b) and c).); and
2) A list of candidate SMFs that can be target SMFs for SMF reallocation.

In other words, the NWDAF may additionally provide SMCCE analytics information including information on 1) and 2) described above to a service consumer (eg, SMF).

For reference, NWDAF can use the NF load analytics according to the prior art to derive 2) above. For example, here, the NF load analytics may be an analytics in which the target NF type is set to SMF and a specific S-NSSAI is performed.

The NWDAF may receive a request message requesting SMCCE analytics from the service consumer. Then, the NWDAF may generate (or determine) the SMCCE analytics information using the data. In addition, the NWDAF may provide the SMCCE analytics information to the service consumer.

A request by a service consumer may include parameters such as the following example. For example, a request message sent by a service consumer to NWDAF may include parameters such as in the following example:
- Analytics ID = "Session Management Congestion Control Experience".
- Target of Analytics Reporting: one or more SUPI(s).
- Analytics Filter Information. For example, Analytics Filter Information may include DNN and/or S-NSSAI.
- Analytics Target Period: the time period over which the statistics or prediction are requested, either in the past or in the future.

In other words, the same parameters as in the described example may be used as input parameters for SMCCE analytics. Additionally, in addition to the parameters as in the example described above, additionally conventional input parameters may be used for the request of the service consumer. In addition to parameters included in the service consumer's request, various parameters may be included in the request.

NWDAF may collects the UE data in order to calculate and provides statistics and predictions on the observed Session Management Congestion Control Experience to a consumer NF. For example, NWDAF may collects the UE data related to Session Management Congestion Control Experience from UE via AMF and/or from UE Data Storage (e.g. UDR, NWDAF acting as Data Storage Function). For example, the NWDAF may collect UE data related to the SMCCE from the SMF.

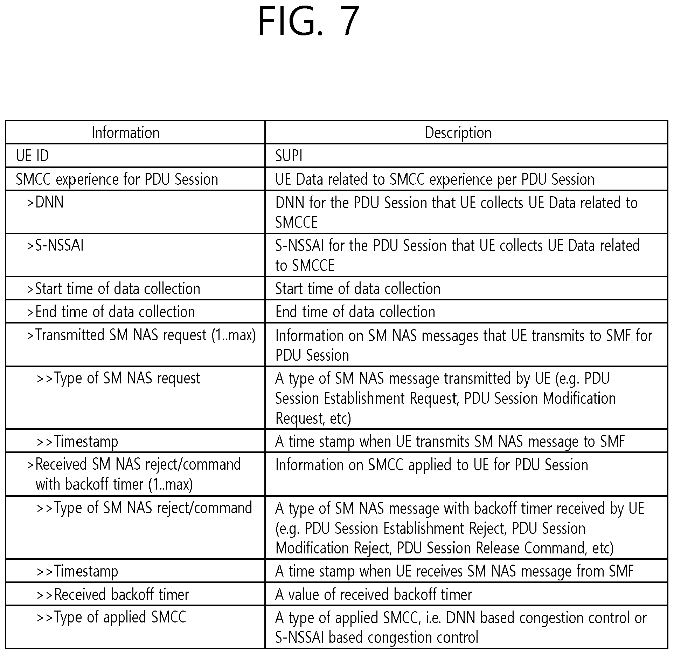

NWDAF may collect data (eg UE data) to analyze the SMCCE. For example, the NWDAF may collect UE data such as the example of FIG. 7 below for the purpose of SMCCE analytics.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 7 shows an example of UE data according to an embodiment of the disclosure of the present specification.

The example of FIG. 7 shows an example of UE data collected by NWDAF for SMCCE analytics.

The UE data collected by the NWDAF may include the information shown in the example of FIG. 7. In other words, the information shown in the example of FIG. 7 may be input data for SMCCE analytics.

The UE data collected by the NWDAF may include UE ID information and includes SMCC (SM congestion control) experience (SMCC experience for PDU Session) information for the PDU session. Here, the UE ID information may include SUPI. The SMCC experience for PDU Session information may be UE data related to the SMCC experience for each PDU session.

UE Data related to SMCC experience per PDU Session may include one or more of the information shown in the example of FIG. 7. Herein, UE Data related to SMCC experience per PDU Session includes one or more of the information among DNN, S-NSSAI, and may further include Start time of data collection, End time of data collection, Transmitted SM NAS request (1..max) and Received SM NAS reject/command with backoff timer (1, ..., max).

Herein, the DNN means a DNN for a PDU session in which the UE collects UE data related to the SMCCE. S-NSSAI means S-NSSAI for a PDU session in which the UE collects UE data related to SMCCE.

Start time of data collection may mean a start time of data collection. End time of data collection may mean an end time of data collection.

Transmitted SMNAS request (E.max) may mean information related to the SM NAS message transmitted by the UE to the SMF. For example, the UE may send an SM NAS message for a PDU session to the SMF. Here, "(Umax)" may mean the number of Transmitted SM NAS request information. For example, the maximum number of Transmitted SM NAS request information may be collected/stored, and the number of collected/stored Transmitted SM NAS requests may mean the number of times the UE transmits an SM NAS message during the data collection period.

Each Transmitted SM NAS request information may include a Type of SM NAS request and Timestamp.

The Type of SM NAS request may mean the type of the SM NAS message transmitted by the UE. For example, the type of the SM NAS message may be a PDU session establishment request, a PDU session modification request, and the like. Timestamp may mean a timestamp when the UE transmits an SM NAS message to the SMF.

Received SM NAS reject/command with backoff timer (1, ... , max) may mean information related to the SMCC applied to the UE. For example, the Received SM NAS reject/command with backoff timer information may mean information related to the SMCC applied to the PDU session of the UE. Here, "(E.max)" may mean the number of Received SM NAS rej ect/command with backoff timer information. Up to max number of Received SM NAS reject/command with backoff timer information may be collected/stored, and the collected/stored number may mean the number of times SMCC is applied to the UE during the data collection period. For example, the number of collected/stored Received SM NAS rej ect/command with backoff timer information may mean the number of times the UE receives an SM NAS rejection or an SM NAS command together with the backoff timer during the data collection period.

The Received SM NAS reject/command with backoff timer information may include Type of SM NAS reject/command, Timestamp, Received backoff timer, and Type of applied SMCC.

The Type of SM NAS reject/command may mean the type of the SM NAS message received by the UE. For example, the type of the SM NAS message may be PDU session establishment rejection, PDU session modification rejection, PDU session release command, and the like. Timestamp may mean a timestamp when the UE receives the SM NAS message from the SMF. The received backoff timer may mean a value of the received backoff timer. Type of applied SMCC may mean a type of applied SMCC. For example, the type of applied SMCC may be DNN-based congestion control or S-NSSAI-based congestion control.

The UE may collect UE data as listed in the example of FIG. 7. For example, the UE may collect UE data related to the SMCC experience for every PDU session. And, the UE may provide the collected UE data to the AMF. For example, the UE may periodically provide the collected UE data to the AMF. Alternatively, when the AMF requests UE data from the UE, the UE may provide the collected UE data to the AMF. Alternatively, when the data collected by the UE reaches a maximum number, the UE may provide the UE data to the AMF.

The UE may provide some or all of the UE data shown in the example of FIG. 7 . In addition, the UE data shown in the example of FIG. 7 is merely an example, and the scope of the disclosure of the present specification is not limited thereto. For example, the UE may provide information not shown in the example of FIG. 7 or a type of information different from the information in the example of FIG. 7. For example, the UE may provide information such as acccess type information(3GPP access or Non-3GPP access) related to Transmitted SM NAS request, received SM NAS reject/command with backoff timer-related access type information (3GPP access or Non-3GPP access), Public Land Mobile Network (PLMN) information related to the Transmitted SM NAS request, PLMN information related to Received SM NAS reject/command with backoff timer, transmitted SM NAS request count/number, received SM NAS reject/command with backoff timer count/number.

For reference, although the description that the UE collects UE data is written in the example of FIG. 7 , this is only an example and the scope of the disclosure is not limited by the example of FIG. 7 . For example, the scope of the disclosure herein may also include a network node (eg, SMF) collecting UE data.

As an example, the SMF may collect the UE data shown in the example of FIG. 7. The SMF may provide the collected UE data to the NWDAF. Specifically, the SMF may collect/store data collected by the UE (eg, data as in the example of FIG. 7) from the standpoint of the SMF. For example, in the case of the Transmitted SM NAS request information in the example of FIG. 7, the SMF may collect/store SM NAS request related information in the form of information on the SM NAS request received from the UE. Accordingly, the Type of SM NAS request may mean the type of the SM NAS message received by the SMF from the UE. For example, the type of the SM NAS message may be a PDU session establishment request, a PDU session modification request, and the like. And, Timestamp may mean a timestamp when the SMF receives the SM NAS message from the UE. In addition, the Received SM NAS reject/command with backoff timer information may be collected/stored in the form of SM NAS reject/command with backoff timer information applied/provided by the SMF to the UE. Accordingly, the Type of SM NAS reject/command may mean the type of the SM NAS message applied/provided to the UE. For example, the type of the SM NAS message may be PDU session establishment rejection, PDU session modification rejection, PDU session release command, and the like. Timestamp may mean a timestamp when the SMF transmits an SM NAS message to the UE. The received backoff timer may be interpreted by replacing the value of the backoff timer applied/provided by the SMF to the UE. Type of applied SMCC may mean a type of applied SMCC. For example, the type of the applied SMCC may be DNN-based congestion control or S-NSSAI-based congestion control.

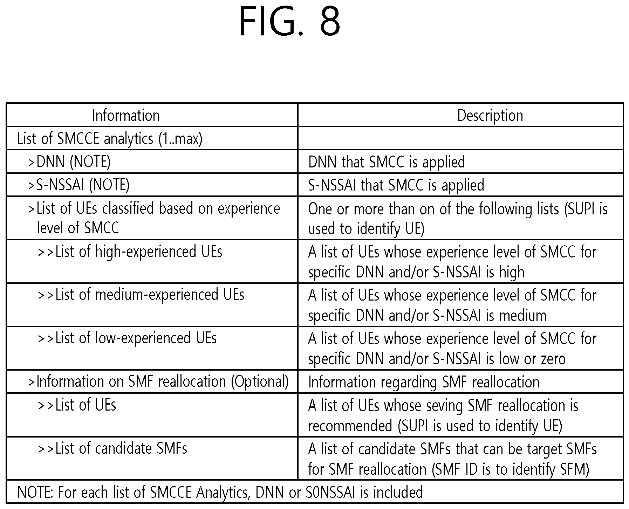

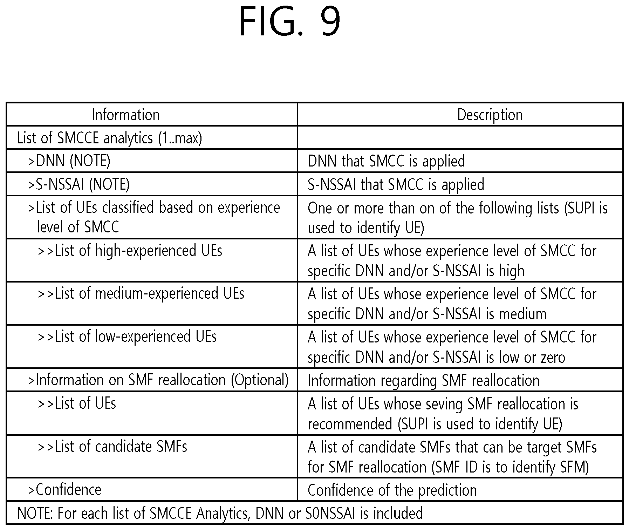

When a service consumer (eg, SMF) requests an analytics (eg, SMCCE) related to SM congestion control from NWDAF, the NWDAF may perform analytics (eg, SMCCE) related to SM congestion control. For example, the NWDAF may collect UE data as in the example of FIG. 7, and may perform SM congestion control-related analytics (eg, SMCCE) based on the collected data. The NWDAF may provide (or transmit) analytics (eg, SMCCE) information related to SM congestion control, such as the example of FIG. 8 and/or the example of FIG. 9 below, to a service consumer (eg, SMF).

For example, NWDAF may output an SMCCE analytics. For example, the NWDAF may output SMCCE statistics or SMCCE predictions as a result of performing SMCCE analytics. As an example, according to the analytics Target Period, the output of the NWDAF may be configured as SMCCE statistics (eg, an example of FIG. 8 ) or SMCCE prediction (eg, an example of FIG. 9 ).

Specific examples of information provided by NWDAF will be described in more detail with reference to the SMCCE statistics of the example of FIG. 8 and the SMCCE prediction of the example of FIG. 9.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 8 shows a first example of SMCCE analytics according to an embodiment of the disclosure of the present specification.

The example of FIG. 8 shows a first example of an SMCCE analytics performed by NWDAF. A first example of SMCCE analytics may be SMCCE statistics. The example of FIG. 8 shows a specific example of SMCCE statistics. The example of FIG. 8 may be analytics information output by the NWDAF.

The SMCCE statistical information according to the example of FIG. 8 may include a List of SMCCE Analytics (1..max). Here, "(L.max)" may mean the number of List of SMCCE Analytics information. List of SMCCE Analytics is a list of SMCCE statistical information derived by NWDAF, and can be provided as many as max.

The List of SMCCE Analytics information may include one or more of the information shown in the example of FIG. 8. For example, the List of SMCCE Analytics information may include one or more pieces of information from among DNN, S-NSSAI, and List of UEs classified based on experience level of SMCC. Optionally, the List of SMCCE Analytics information may further include Information on SMF reallocation.

In the example of FIG. 8, the DNN may mean a DNN to which SMCCE is applied. S-NSSAI may mean S-NSSAI to which SMCCE is applied.

The List of UEs classified based on experience level of SMCC means a list of UEs classified based on the experience level of the SMCC (eg, the level at which the UE has experienced the SMCC). The List of UEs classified based on experience level of SMCC includes one or more lists among List of high-experienced UEs, List of medium-experienced UEs, and List of low-experienced UEs, as illustrated in FIG. 8. In the List of UEs classified based on experience level of SMCC, SUPI may be used to identify the UE.

Herein, the List of high-experienced UEs means a list of UEs having a high SMCC experience level for a specific DNN and/or a specific S-NSSAI. List of medium-experienced UEs means a list of UEs with a medium experience level of SMCC for a specific DNN and/or a specific S-NSSAI. List of low-experienced UEs means a list of UEs with low SMCC experience level for a specific DNN and/or specific S-NSSAI or UEs with SMCC experience level 0 (eg, UEs that have not experienced SMCC). The experience level that the NWDAF applies when classifying UEs according to the experience level of the SMCC may be based on various values. For example, NWDAF may classify UEs based on the number of SMCCs experienced by the UE, or NWDAF may classify UEs based on the ratio of the SMCC experienced to the number of SM NAS messages transmitted by the UE, or NWDAF may classify UEs based on the sum of the backoff timer values experienced by the UE.

In the example of FIG. 8, Information on SMF reallocation may mean information related to SMF reallocation. Information on SMF reallocation may include List of UEs and List of candidate SMFs. The List of UEs may be a list of UEs for which serving SMF reallocation is recommended. In the List of UEs, SUPI can be used to identify the UE. List of candidate SMFs may mean a list of candidate SMFs that may be target SMFs for SMF reassignment. In the List of candidate SMFs, the SMF ID may be used to identify the SMF.

According to the NOTE of the example of FIG. 8, for each list of the SMCCE analytics of the example of FIG. 8, a DNN or S-NSSAI may be included. Alternatively, each list of the SMCCE analytics of the example of FIG. 8 may include both a DNN and an S-NSSAI.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 9** **shows a second example of SMCCE analytics according to an embodiment of the disclosure of the present specification.**

The example of FIG. 9 shows a specific example of SMCCE prediction.

The example of FIG. 9 shows a second example of an SMCCE analytics performed by NWDAF. A second example of SMCCE analytics may be SMCCE prediction. The example of FIG. 9 shows a specific example of SMCCE prediction. The example of FIG. 9 may be analytics information output by the NWDAF.

The SMCCE prediction information according to the example of FIG. 9 may include a List of SMCCE Analytics (L.max). Here, "(L.max)" may mean the number of List of SMCCE Analytics information. List of SMCCE Analytics is a list of SMCCE prediction information derived by NWDAF, and may be provided as many as max.

The List of SMCCE Analytics information may include one or more of the information shown in the example of FIG. 9. For example, the List of SMCCE Analytics information may include one or more pieces of information from among DNN, S-NSSAI, and List of UEs classified based on experience level of SMCC. And, the List of SMCCE Analytics information may include Confidence information. Optionally, the List of SMCCE Analytics information may further include Information on SMF reallocation.

In the example of FIG. 9, DNN may mean a DNN to which SMCCE is applied. S-NSSAI may mean S-NSSAI to which SMCCE is applied.

The List of UEs classified based on experience level of SMCC may mean a list of UEs classified based on the experience level of the SMCC (eg, the level at which the UE has experienced the SMCC). The List of UEs classified based on experience level of SMCC may include one or more lists among List of high-experienced UEs, List of medium-experienced UEs, and List of low-experienced UEs, as illustrated in FIG. 9. In the List of UEs classified based on experience level of SMCC, SUPI may be used to identify the UE.

In the example of FIG. 9, the List of high-experienced UEs may mean a list of UEs having a high SMCC experience level for a specific DNN and/or a specific S-NSSAI. List of medium-experienced UEs may mean a list of UEs with a medium experience level of SMCC for a specific DNN and/or a specific S-NSSAI. List of low-experienced UEs may mean a list of UEs with low SMCC experience level for a specific DNN and/or specific S-NSSAI or UEs with SMCC experience level 0 (eg, UEs that have not experienced SMCC). The experience level that the NWDAF applies when classifying UEs according to the experience level of the SMCC may be based on various values. For example, NWDAF may classify UEs based on the number of SMCCs experienced by the UE, or NWDAF may classify UEs based on the ratio of the SMCC experienced to the number of SM NAS messages transmitted by the UE, or NWDAF may classify UEs based on the sum of the backoff timer values experienced by the UE.

In the example of FIG. 9, Information on SMF reallocation may mean information related to SMF reallocation. Information on SMF reallocation may include List of UEs and List of candidate SMFs. The List of UEs may be a list of UEs for which serving SMF reallocation is recommended. In the List of UEs, SUPI can be used to identify the UE. List of candidate SMFs may mean a list of candidate SMFs that may be target SMFs for SMF reassignment. In the List of candidate SMFs, the SMF ID may be used to identify the SMF.

According to the NOTE of the example of FIG. 9, for each list of the SMCCE analytics of the example of FIG. 9, a DNN or S-NSSAI may be included. Alternatively, each list of the SMCCE analytics of the example of FIG. 8 may include both a DNN and an S-NSSAI.

In the example of FIG. 9, Confidence may mean the confidence of prediction.

For reference, in the example of FIG. 8 and the example of FIG. 9, an example has been described in which the List of low-experienced UEs includes UEs that have never experienced SMCC, this is merely an example, and the scope of the disclosure of the present specification is not limited thereto. For example, the scope of the disclosure of the present specification may also include an example in which a separate list is provided for UEs that have never experienced SMCC.

The NWDAF may provide some or all of the information shown in the example of FIG. 8 and/or the example of FIG. 9 . For example, the NWDAF may provide some or all of the information shown in the example of FIG. 8 and/or the example of FIG. 9 to a service consumer (eg, SMF).

In addition, the information shown in the example of FIG. 8 and/or the example of FIG. 9 is only an example, and the scope of the disclosure of the present specification is not limited thereto. For example, the NWDAF may provide information not shown in the example of FIG. 8 and/or the example of FIG. 9 or information in a form different from the information in the example of FIG. 8 and/or the example of FIG. 9 to a service consumer (eg, SMF).

For example, the NWDAF may provide a backoff timer value that should be provided to UEs on average or a backoff timer value that can be provided to UEs on average to a service consumer (eg, SMF). Here, the backoff timer value to be provided on average or the backoff timer value that can be provided on average may be set to different values for each of high-experienced UEs, medium-experienced UEs, and low-experienced UEs.

For example, the NWDAF may provide information on how many UEs SMCC should be applied to or information on how many UEs SMCC can be applied to a service consumer (eg, SMF). Here, for each of high-experienced UEs, medium-experienced UEs, and low-experienced UEs, information on how many UEs SMCC should be applied or information on how many UEs SMCC can be applied may be set to a different value.

For example, NWDAF may provide a list of UEs to which SMCC should be applied at a high level, a list of UEs to which SMCC should be applied at a normal level and/or a list of UEs to which SMCC should be applied at a low level, and a list of UEs that should not apply SMCC at a low level to service consumers (eg SMFs). Here, the NWDAF may provide the service consumer (eg, SMF) with information on the average backoff timer value applicable to each list along with the list of UEs for each level to which the SMCC is applied.

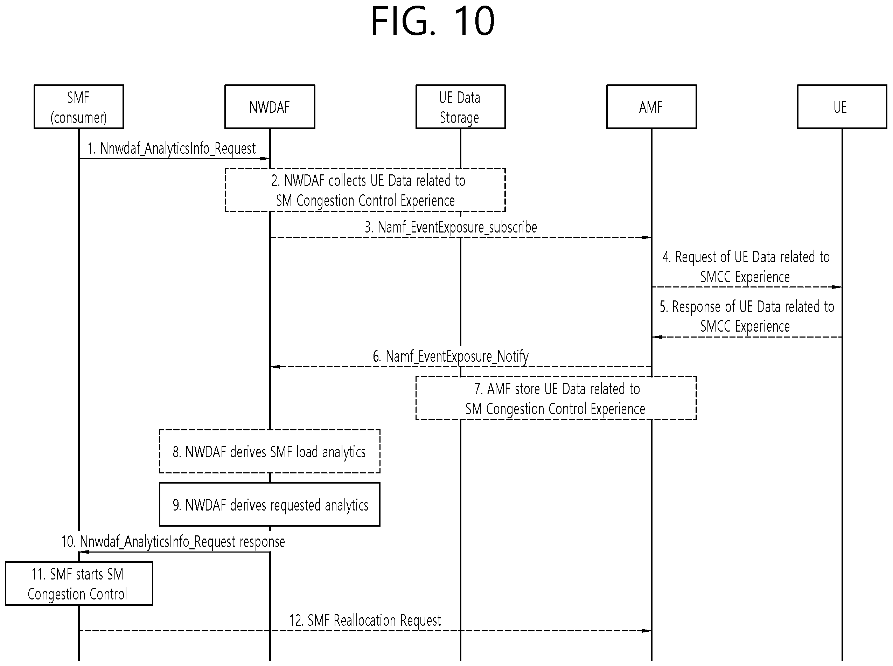

Hereinafter, with reference to the example of FIG. 10, an example of the procedure related to the SMCCE analytics described above through various examples will be described.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 10** **shows an example of a procedure according to an embodiment of the disclosure of the present specification.**

The example of FIG. 10 shows an example of a procedure related to SMCCE analytics. For example, the example of FIG. 10 describes a procedure for SMCCE analytics using UE data.

For reference, in the example of FIG. 10, an operation in which the NWDAF receives UE data from the UE through the AMF is included, but this is only an example. For example, in the disclosure herein, the NWDAF may receive UE data from a service consumer (eg, SMF) and SMFs other than the service consumer.
1) The SMF may request the NWDAF for analytics information on the "Session Management Congestion Control Experience" provided by the NWDAF. For example, the SMF may transmit a request message requesting analytics information for "Session Management Congestion Control Experience" to the NWDAF.

The request message sent by the SMF to the NWDAF may include the parameters described above. For example, the request message may include parameters such as Analytics ID, Target of Analytics Reporting, Analytics Filter Information, and Analytics Target Period.

For reference, the SMF may not include UE information (eg, one or more SUPIs) in the request message. In this case, in step 2) to be described later, the NWDAF may collect UE data for DNN and/or S-NSSAI from UE Data Storage. The UE data storage may be, for example, a network node that stores data related to the UE, such as a Unified Data Repository (UDR) or NWDAF. Also, in step 3) to be described later, the NWDAF may provide the SMF ID to the AMF. By providing the SMF ID to the AMF, the NWDAF may determine the UEs served by the SMF corresponding to the SMF ID.

The SMF may include information on serving AMFs in addition to the request message. Here, the information on the serving AMFs may be in the form of information on the serving AMF for each UE. Alternatively, the information on the serving AMFs may be information in the form of a list of serving AMFs. When the SMF additionally includes information on serving AMFs in the request message, some operations performed by the NWDAF to perform step 3) may be omitted. For example, an operation in which the NWDAF queries the Network Repository Function (NRF) for the UE's serving AMF and obtains information on the serving AMF from the NRF may be omitted.

The SMF may additionally include congestion level (eg, high/middle/low, or high/medium/low, or level 1, 2, 3, etc.) information in the request message. NWDAF may utilize congestion level information for SMCCE analytics. For example, NWDAF may utilize congestion level information when NWDAF derives (or performs) SMCCE analytics and/or when NWDAF collects data for SMCCE analytics.

For reference, in the example of FIG. 10, the SMF performing step 1) may be an SMF in which congestion is expected, an SMF in which congestion has already started, or an SMF attempting to initiate SM congestion control, or an SMF initiating SM congestion control.

NWDAF may optionally perform steps 2) and/or 3) described below. For reference, steps 4) to 7) may be performed when step 3) is performed.

2) The NWDAF may collect data related to the SM Congestion Control Experience from UE Data Storage (eg, UDR, NWDAF acting as Data Storage Function, etc.).

NWDAF may acquire necessary UE data from UE Data Storage based on the information provided in step 1).

For example, SMF may have requested SMCCE analytics for DNN#1 and S-NSSAI#2 from NWDAF in step 1). In this case, the NWDAF may request the UE's SMCC (SM congestion control) experience information/data for a PDU Session associated with DNN#1 and S-NSSAI#2 from UE Data Storage. Then, the NWDAF may obtain SMCC (SM congestion control) experience information/data of the UE for the PDU Session associated with DNN#1 and S-NSSAI#2 from the UE Data Storage.

3) In order to collect UE data related to the SM Congestion Control Experience, the NWDAF may transmit a subscription request to all serving AMFs. For example, the NWDAF to receive UE data related to SMCCE from the UE via AMF, the NWDAF may transmit a request message (eg, a Namf_EventExposure_Subscribe message) for subscribing to the service of the AMF that provides UE data related to the SMCCE to the AMF. For reference, step 3) may be performed only when the NWDAF does not subscribe to a service for collecting UE data related to SMCCE.

Here, the NWDAF may configure (or set) a subscription request based on the information provided in step 1). For example, SMF may have requested SMCCE analytics for DNN#1 and S-NSSAI#2 from NWDAF in step 1). In this case, the NWDAF requests the AMF for SMCC (SM congestion control) experience information/data of the UE for the PDU Session associated with DNN#1 and S-NSSAI#2, the NWDAF may obtain SMCC (SM congestion control) experience information/data of the UE for the PDU Session associated with DNN#1 and S-NSSAI#2 from the AMF.

If the NWDAF has obtained the necessary UE data for some UEs in step 2), the NWDAF may not perform step 3) for these UEs.

4) The AMF may request the UE to provide UE data related to the SM congestion control experience. For example, the AMF may transmit a request message (eg, Request of UE Data related to SMCC Experience) for requesting to provide UE data related to the SM congestion control experience to the UE.

The AMF may perform step 4) for the UE when the NWDAF requests UE data collection for a specific UE. For example, when the AMF receives a subscription request message for collecting UE data for a specific UE from the NWDAF in step 3), the AMF may perform step 4) for the UE. Alternatively, instead of the NWDAF providing the UE information to the AMF in step 3), the DNN and/or S-NSSAI information may be provided to the AMF. In this case, the AMF may request UE data collection from UEs that have the corresponding DNN and/or S-NSSAI as subscription information (eg, UE context information) among the UEs, that the AMF serves.

The AMF may also request UE data collection from UEs that have not yet created a PDU session related to DNN and/or S-NSSAI among UEs.

5) The UE may provide the UE data collected in relation to the SMCCE to the AMF. for example,

For reference, for steps 4) and 5), a conventional NAS message may be extended and used, or a new NAS message may be defined and used.

For reference, the messages transmitted in steps 4) and 5) may be transmitted through 3GPP access or may be transmitted through non-3GPP access. In order for the AMF to perform step 4), it may have to paging the UE.

6) The AMF may provide the collected UE data to the NWDAF. For example, the AMF may transmit a Namf_EventExposure_Notify message including the collected UE data to the NWDAF.

7) AMF may store the collected UE data in UE Data Storage.

For reference, step 7) may be optionally performed. For example, instead of storing UE Data in UE Data Storage, AMF may store UE Data provided from UE in UE context stored by itself (AMF).

8) NWDAF may decide to include information related to SMF reallocation in the SMCCE analytics. For example, in the case where the SMF requests information related to SMF reassignment based on the number of UEs served by the SMF in step 1), etc. NWDAF may decide to include information pertaining to SMF reallocation in the analytics. If NWDAF decides to include information pertaining to SMF reassignment in its analytics, NWDAF may derive (or perform) SMF load analytics by utilizing conventional NF load analytics. Here, the target NF type of the SMF load analytics is set to SMF, and the SMF load analytics may be performed for a specific S-NSSAI.

For reference, step 8) may be optionally performed. For example, step 8) may be performed only if the NWDAF wants to include information related to SMF reallocation in the SMCCE analytics.

9) NWDAF may derive (or perform) the analytics requested by the SMF (eg SMCCE analytics). For example, based on the data received in step 2) and/or the data received in step 6), optionally the SMF load analytics derived in step 8), the NWDAF may derive (or perform) the SMCCE analytics.

The NWDAF may collect various necessary information from other NF(s) and/or OAM to derive (or perform) the SMCCE analytics. For example, NWDAF may collect information on the total number of PDU sessions associated with the DNN and/or S-NSSAI, information on the number of UEs that have created (or established)/existing PDU Sessions associated with the DNN and/or S-NSSAI, etc, from other NF(s) and/or OAMs. Here, the corresponding DNN and/or S-NSSAI may mean the DNN and/or S-NSSAI for which the SMF requested SMCCE analytics in step 1) above.

In order to derive (or perform) the SMCCE analytics, the NWDAF may additionally use various analytics (eg, UE Communication Analytics, UE Mobility Analytics, etc.) defined in the prior art.

10) NWDAF may provide analytics information on SMCCE to SMF. For example, the NWDAF may transmit an Nnwdaf_Anlayticsinfo_Request response message including SMCCE analytics information to the SMF.

11) The SMF may initiate SM congestion control (eg, DNN-based congestion control and/or S-NSSAI-based congestion control). SMF may consider fairness (eg, fairness between UEs) when applying SM congestion control. For example, based on SMCCE analytics information (eg, SMCCE analytics information described with reference to the example of FIG. 8 and the example of FIG. 9), SMF may apply SM congestion control in consideration of fairness.

As an example, the SMF may set a value of a backoff timer provided to the UE based on the SMCCE analytics information. For example, the SMF may transmit a NAS SM rejection message with a short backoff timer value to UEs included in the list of high-experienced UEs, the SMF may transmit a NAS SM rejection message with a long backoff timer value to UEs included in the list of low-experienced UEs.

As another example, SMF may not apply SM congestion control to UEs included in the list of high-experienced UEs, SMF may apply SM congestion control to UEs included in the list of medium-experienced UEs and UEs included in the list of low-experienced UEs.

As another example, for each list (eg, List of high-experienced UEs, List of medium-experienced UEs, List of low-experienced UEs), the applicable backoff timer or the range(Example: minimum and maximum value of backoff timer value) of the backoff timer may be set in the SMF. Alternatively, the NWDAF may provide the range(Example: minimum and maximum value of backoff timer value) of backoff timers or backoff timers that can be applied for each list (eg List of high-experienced UEs, List of medium-experienced UEs, List of low-experienced UEs) to the SMF, by including it in the SMCCE analytics. Then, based on the range(Example: minimum and maximum value of backoff timer value) of backoff timer or backoff timer that can be applied to each list (that is, List of high-experienced UEs, List of medium-experienced UEs, List of low-experienced UEs), the SMF may provide a backoff timer value to the UE included in each list.

As another example, for each list (ie, List of high-experienced UEs, List of medium-experienced UEs, List of low-experienced UEs), the number of UEs to which SMCC should be applied may be set in the SMF. Alternatively, the NWDAF may provide the SMF by including the number of UEs to which SMCC should be applied for each list (ie, List of high-experienced UEs, List of medium-experienced UEs, List of low-experienced UEs) in the SMCCE analytics. Then, the SMF may apply SMCC based on the number of UEs to which SMCC should be applied for each list (ie, List of high-experienced UEs, List of medium-experienced UEs, List of low-experienced UEs).

As another example, the NWDAF may provide information on UEs to which SMCC should be applied for each list (ie, List of high-experienced UEs, List of medium-experienced UEs, List of low-experienced UEs), by including the information in the SMCCE analytics. Then, SMF may apply SMCC for these UEs.

As another example, the above-described various examples (various examples in which the SMF applies SMCC) may be used by the SMF in a combined form. for example,

A backoff timer or the range of the backoff timer (i.e. min and max) that can be applied and the number of UEs to which SMCC should be applied for each list (ie, List of high-experienced UEs, List of medium-experienced UEs, List of low-experienced UEs) may be set in SMF. Alternatively, the NWDAF may provide a backoff timer or the range of the backoff timer (i.e. min and max) that can be applied and the number of UEs to which SMCC should be applied for each list (ie, List of high-experienced UEs, List of medium-experienced UEs, List of low-experienced UEs) to the SMF by including this in the SMCCE analytics. Then, based on a backoff timer or the range of the backoff timer (i.e. min and max) that can be applied and the number of UEs to which SMCC should be applied ,for each list (ie, List of high-experienced UEs, List of medium-experienced UEs, List of low-experienced UEs), the SMF may apply a backoff timer to as many UEs as the number of UEs corresponding to each list.

If the SMF has already started SM congestion control before performing step 11), the SMF may apply SM congestion control based on the SMCCE analytics provided from the NWDAF.

12) In step 10) described above, if information on SMF reallocation was included in the SMCCE analytics, the SMF may request SMF reassignment from the serving AMF for all UEs included in the "UE list for which serving SMF reassignment is recommended". For example, the SMF may transmit an SMF reassignment request message to the AMF.

When NWDAF sends SMCCE analytics including information related to SMF reallocation to SMF in step 10), NWDAF may not include "A list of candidate SMFs that can be target SMFs for SMF reallocation" in SMCCE analytics. In this case, the SMF may transmit the SMF reallocation request message to the AMF without the information (eg, "A list of candidate SMFs that can be target SMFs for SMF reallocation"). Then, the AMF may perform an operation of selecting/determining a target SMF for SMF reassignment.

To request SMS reallocation, the SMF may use the Namf_Communication_N1N2MessageTransfer service operation together with an SMF reallocation request indication (eg, SMF Reallocation requested indication). Information on the candidate SMF may be introduced as a new parameter of this service operation (eg, Namf_Communication_N1N2MessageTransfer).

For reference, although step 12) is shown to be performed after step 11) in the example of FIG. 10, this is merely an example. Step 12) may be performed before step 11).

For reference, the SMF may perform SMF reallocation even if the above-described example and information on SMF reallocation are not included in the SMCCE analytics. That is, the SMF may perform SMF reallocation even if information on SMF reallocation is not included in the SMCCE analytics. For example, the SMF may perform SMF reallocation based on the setting of the SMF. Here, the SMF setting may be, for example, a setting to perform SMF reallocation for the list of high-experienced UEs when the number of UEs included in the list is several or more. For another example, the SMF configuration may be a configuration to perform SMF reallocation for all UEs included in the List of high-experienced UEs.

Various service operations (eg, operations described in steps 1 to 12) shown in the example of FIG. 10 may be extended and used. In addition, other service operations (eg, a conventional service operation or a newly defined service operation) other than the various service operations shown in the example of FIG. 10 may be used.

For reference, in the example of FIG. 10, a request-response model (eg, when the SMF requests the SMCCE analytics from the NWDAF, the NWDAF provides the SMCCE analytics to the SMF) related to the Nnwdaf service operation is shown, but this is only an example. The method proposed in the present specification may also be applied by being extended to subscription-notify model (e.g., a method in which, when SMF requests a subscription related to SMCCE analytics from NWDAF, the NWDAF transmits the SMCCE analytics to the SMF when an event related to the SMCCE analytics occurs).

The NF provided with UE Data from the UE may be an NF (eg, PCF, other SMF, new NF defined to collect UE data, etc.) other than the AMF according to the example of FIG. 10. In this case, the NWDAF may request and collect UE data from the NF that collects the UE data instead of the AMF. For example, in step 3), the NWDAF may request UE data from the SMF instead of the AMF, and collect the UE data.

For reference, in the various examples described above, NWDAF provided SMCCE analytics to SMF at the request of SMF. However, this is only an example, and NWDAF may derive (or perform) SMCCE analytics without the SMF's request and provide SMCCE analytics to SMFs.

For reference, the various examples described above may be modified/extended and applied to Mobility Management congestion control (MMCC). For example, the UE may collect MMCC experience information/data and provide the collected MMCC experience information/data to the network. Then, NWDAF can provide Analytics for MMCC Experience to AMF by using the collected MMCC experience information/data. AMF can apply MMCC considering fairness by receiving Analytics for MMCC Experience from NWDAF. In this case, the items/information/parameters described in relation to Session Management and SMCC described in various examples above may be interpreted/applied according to Mobility Management and MMCC. For example, the SM NAS message in various examples related to SMCC described above may be understood as an MM NAS message.

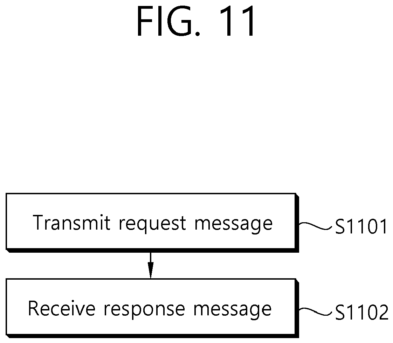

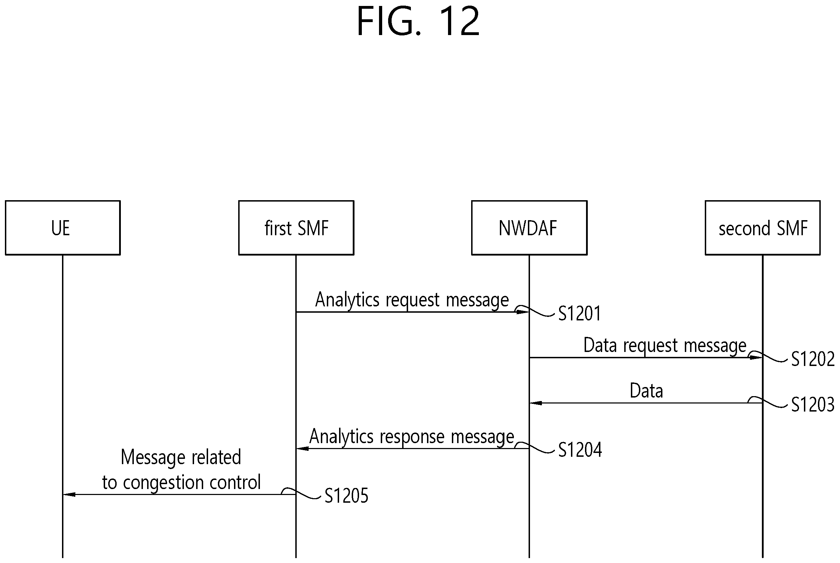

Hereinafter, an example of an operation of a Network (e.g. SMF, NWDAF, AMF, UE Data storage, etc.) and an example of an operation of a terminal described in the disclosure of the present specification will be described in detail with reference to the example of FIG. 11 and the example of FIG. 12. For reference, the operations described in the example of FIG. 11 and the example of FIG. 12 below are merely examples, the network and the terminal may perform not only the operations described in the example of FIG. 11 and the example of FIG. 12 , but also the operations described through various examples of the disclosure of the present specification.

The following drawings were created to explain a specific example of the present specification. Since the names of specific devices described in the drawings or the names of specific signals/messages/fields are presented by way of example, the technical features of the present specification are not limited to the specific names used in the following drawings.

**FIG. 11** **shows an example of operation of a network according to an embodiment of the disclosure of the present specification.**

FIG. 11 may mean an operation of a service consumer (eg, SMF) described in various examples of the disclosure of the present specification. Among various network nodes that can be service consumers, FIG. 11 will be described with a focus on an example in which the SMF performs the operation of FIG. 11.

In step S1101, the SMF transmits a request message requesting SMCCE analytics to the NWDAF. The request message may include, for example, at least one of an analytics ID (Analytics ID), a target of analytics reporting, analytics filter information (Analytics Filter Information), or an analytics target period. For example, step S1101 may be performed in the same manner as described in step 1) of FIG. 10.

In step S1102, the SMF receives a response message. The NWDAF transmits a response message including SMCCE analytics information to the SMF in response to the request message. The SMF receives a response message including SMCCE analytics information. The SMCCE analytics information includes a list of one or more of a list of high-experienced User Equipment, a list of medium-experienced User Equipment, or a list of low-experienced User Equipment. For example, step S1102 may be performed in the same manner as described in step 10 of FIG. 10.

When the NWDAF receives a request message from the SMF, it may collect data to analyze the SMCCE. For example, the NWDAF may request data related to the SMCCE from the UE or the SMF. The NWDAF may receive data related to the SMCCE from the UE or the SMF. The NWDAF may perform (or derive) an SMCCE analytics based on the received data. The NWDAF may transmit the response message to the SMF by including the SMCCE analytics information in the response message of step S1102.

The following drawings were created to explain a specific example of the present specification. Since the names of specific devices described in the drawings or the names of specific signals/messages/fields are presented by way of example, the technical features of the present specification are not limited to the specific names used in the following drawings.

FIG. 12 shows an example of operation of a terminal and a network according to an embodiment of the disclosure of the present specification.

FIG. 12 shows a UE, a first SMF (first SMF), an NWDAF, and a second SMF (second SMF). Here, the first SMF may be an SMF that requests SMCCE analytics from the NWDAF. The second SMF may be an SMF that provides the NWDAF with data related to the SMCCE. Although one second SMF is illustrated in FIG. 12, this is only an example, and the NWDAF may receive data related to the SMCCE from one or more second SMFs.

In step S1201, the first SMF transmits an analytics request message to the NWDAF. Here, the analytics request message is a request message for requesting SMCCE analytics. For example, step S 1201 may be performed in the same manner as described in step S1101 of FIG. 11 and/or step 1) of FIG. 10. The first SMF may transmit an analytics request message to the NWDAF when it intends to utilize SMCCE analytics to apply SM congestion control.

For reference, in order for the SMF to utilize the SMCCE analytics information, the SMF may need to request the SMCCE analytics information from the NWDAF before applying the congestion control due to potential congestion conditions formation.

In step S1202, the NWDAF may transmit a data request message to the second SMF. For example, step S 1202 may be performed in the same manner as described in step 3) of FIG. 10. For example, the data request message may be Nsmf_EventExposure_Subscribe.

For example, in step S1202, in a manner similar to step 3) of FIG. 10, the NWDAF may transmit to the second SMF a request message for subscribing data related to the SMCCE to a service provided by the SMF. For reference, if the NWDAF has already transmitted the data request message to the second SMF before performing the step S 1202, the step S 1202 may be omitted. The NWDAF may transmit a data request message to all SMFs serving the DNN and/or S-NSSAI included in the analytics filter information received in step S1201.

In step S1203, the second SMF may transmit data to the NWDAF. Here, the data transmitted by the second SMF may be data related to the SMCCE. The second SMF may provide data as in the example of FIG. 7 to the NWDAF. For example, the second SMF may collect data related to SMCCE when applying SM congestion control to a UE that the SMF serves. In addition, the second SMF may provide the collected data related to the SMCCE to the NWDAF. For reference, the first SMF may also provide data to the NWDAF like the second SMF.

In step S1204, the NWDAF transmits an analytics response message to the first SMF. Before performing step S1204, the NWDAF may perform (or derive) SMCCE analytics based on the data received from the second SMF. For example, the NWDAF may perform (or derive) the SMCCE analytics in the same manner as step 9) of FIG. 10. Then, the NWDAF transmits an analytics response message including the SMCCE analytics information to the first SMF. For example, the NWDAF may transmit an analytics response message to the first SMF in the same manner as in step S 1102 of FIG. 11 and/or step 10 of FIG. 10.

In step S1205, the first SMF may transmit a message related to congestion control to the UE. For example, the first SMF may transmit a NAS reject message or a NAS command message. The NAS rejection message or NAS command message may be, for example, a message including information related to congestion control applied by the first SMF. The first SMF may determine a value of a backoff timer applied to the UE for SM congestion control based on the SMCCE analytics information. The NAS reject message sent to the UE may include the value of the backoff timer. The NAS rejection message may be, for example, a PDU session creation rejection message or a PDU session modification rejection message. The NAS command message may be, for example, a PDU session release command message. The NAS rejection message may be a message transmitted in response to the NAS request message transmitted by the UE to the SMF.

As described in the disclosure of the present specification, the SMF may perform SM congestion control in consideration of fairness of the UE. For example, the SMF may perform SM congestion control in consideration of fairness based on SM congestion control related experience information/data provided by the UE (or NF such as SMF). For example, the NWDAF may perform SMCCE analytics based on SM congestion control related experience information/data from the UE (or NF such as SMF). The SMF may perform SM congestion control based on the SMCCE analytics provided from the NWDAF. Accordingly, fairness of the UE related to SM congestion control may be improved. Improving the fairness of the UE may lead to an improvement in the user's service experience. For example, the situation, in which a new PDU session must be created, and when the service is terminated (or when the application execution is terminated), the PDU session is being released, in order for UE#1 to receive a certain service (or to execute an application), is assumed. In this situation, as in the examples of the following two UEs, the UE's fairness is not taken into account, so that a user's service experience may be poor. As a first example, in this situation, UE#1 may receive a PDU session creation rejection message from the SMF mainly including a long backoff timer value for the PDU session creation request message. For the second example, UE#2 may receive a PDU session creation rejection message from the SMF mainly including a short-time backoff timer value for the PDU session creation request message in the same situation, or UE#2 may receive a PDU session creation permission message from the SMF. In this case, the user of UE#1 may have a worse service experience than the user of UE#2. According to the disclosure of the present specification, since fairness of the UE related to SM congestion control is improved, the user's service experience may be improved.

As described in the disclosure of this specification, the NWDAF may collect data (eg, UE data) related to the SM congestion control experience. For example, the NWDAF may collect data (eg, UE data) from the UE via AMF. As another example, the NWDAF may collect data (eg, UE data) from the SMF. Data related to the SM congestion control experience (eg, UE data) may be information associated with a PDU session for a specific DNN and/or a specific S-NSSAI.

As described in the disclosure of the present specification, the SMF may request the SMCCE analytics from the NWDAF. Then, the SMF may receive SMCCE analytics information from the NWDAF. The SMF may apply SM congestion control to the UE based on the SMCCE analytics information. Since the SMF applies the SMC congestion control in consideration of the SMCCE analytics information, the fairness problem between UEs to which the SM congestion control is applied can be resolved.

As described in the disclosure of the present specification, the NWDAF may perform (or derive) SMCCE analytics based on SMCCE-related data (eg, UE Data) collected by the NWDAF. NWDAF may provide SMCCE analytics information to service consumers (eg SMFs). For example, when a service consumer (eg, SMF) requests an SMCCE analytics from NWDAF, SMCCE analytics information may be provided to a service consumer (eg, SMF). Then, the service consumer (eg, SMF) may apply SM congestion control based on the SMCCE analytics information.

For reference, the operation of the terminal (eg, UE) described in this specification may be implemented by the apparatus of FIGS. 1 to 3 described above. For example, the terminal (eg, UE) may be the first device 100 or the second device 200 of FIG. 1 . For example, an operation of a terminal (eg, UE) described herein may be processed by one or more processors 102 or 202 . The operation of the terminal described herein may be stored in one or more memories 104 or 204 in the form of an instruction/program (e.g. instruction, executable code) executable by one or more processors 102 or 202 . One or more processors 102 or 202 control one or more memories 104 or 204 and one or more transceivers 105 or 206, and may perform the operation of the terminal (eg, UE) described herein by executing instructions/programs stored in one or more memories 104 or 204.

In addition, instructions for performing an operation of a terminal (eg, UE) described in the disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (eg, UE) described in the disclosure of the present specification.

For reference, the operation of a network node (eg, AMF, SMF, NWDAF, UE Data Storage, etc.) or base station (eg, NG-RAN, gNB, gNB(NB-IoT), gNB(NR) eNB, RAN, etc.) described herein may be implemented by the apparatus of FIGS. 1 to 3 to be described below. For example, a network node or a base station may be the first device 100a of FIG. 1 or the second device 100b of FIG. 1. For example, the operation of a network node or base station described herein may be processed by one or more processors 102 or 202. The operation of the terminal described herein may be stored in one or more memories 104 or 204 in the form of an instruction/program (e.g. instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of this specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

## Claims

1. A method for performing communication related to a congestion control, the method performed by a Session Management Function, SMF, (420) and comprising:
transmitting (S1101, S1201) a request message for Session Management Congestion Control Experience, SMCCE, analytics to Network Data Analytics Function, NWDAF,
wherein the request message includes Data Network Name, DNN, for protocol data unit, PDU, session related to Session Management Congestion Control, SMCC, and/or Single - Network Slice Selection Assistance Information, S-NSSAI, for the PDU session related to the SMCC; and
receiving (S1102, S1204) a response message, which includes SMCCE analytics information including list of User Equipments, UEs, (100) classified based on experience level of the SMCC, in response of the request message from the NWDAF,
wherein list of the UEs (100) classified based on experience level of the SMCC includes one or more than one of a list of high-experienced UEs (100) whose experience level of the SMCC for the DNN and/or the S-NSSAI is high, a list of medium-experienced UEs (100) whose experience level of the SMCC for the DNN and/or the S-NSSAI is medium, or a list of low-experienced UEs (100) whose experience level of the SMCC for the DNN and/or the S-NSSAI is low.

2. The method of claim 1, further comprising:
applying session management congestion control, based on the SMCCE analytics information.

3. The method of claim 2, wherein the applying the session management congestion control further comprising:
determining a backoff timer value to be provided to one or more UEs (100) to which the session management congestion control is to be applied, based on the SMCCE analytics information.

4. The method of claim 3,
wherein the backoff timer value to be provided to one or more UEs (100) is determined according to which list the one or more UEs (100) are included among the list of UEs (100) with high SMCC experience, the list of UEs (100) with medium SMCC experience, or the list of UEs (100) with low SMCC experience, respectively.

5. The method of claim 1,
wherein the SMCCE analytics information is information determined by the NWDAF based on input data collected by the NWDAF.

6. The method of claim 1,
wherein the request message further includes one or more information among an Analytics ID set to "Session Management Congestion Control Experience", a Target of Analytics Reporting that includes one or more SUPIs, or an Analytics target period.

7. A Session Management Function, SMF, (420) for performing communication related to congestion control, wherein the SMF (420) comprises:
at least one processor; and
at least one memory for storing instructions and operably electrically connectable with the at least one processor;
wherein operations performed based on the execution of the instructions by the at least one processor include:
transmitting (S1101, S1201) a request message for Session Management Congestion Control Experience, SMCCE, analytics to Network Data Analytics Function, NWDAF,
wherein the request message includes Data Network Name, DNN, for protocol data unit, PDU, session related to Session Management Congestion Control, SMCC, and/or Single - Network Slice Selection Assistance Information, S-NSSAI, for the PDU session related to the SMCC; and
receiving (S1102, S1204) a response message, which includes SMCCE analytics information including list of User Equipments, UEs, (100) classified based on experience level of the SMCC, in response of the request message from the NWDAF,
wherein list of the UEs (100) classified based on experience level of the SMCC includes one or more than one of a list of high-experienced UEs (100) whose experience level of the SMCC for the DNN and/or the S-NSSAI is high, a list of medium-experienced UEs (100) whose experience level of the SMCC for the DNN and/or the S-NSSAI is medium, or a list of low-experienced UEs (100) whose experience level of the SMCC for the DNN and/or the S-NSSAI is low.

8. A method for performing communication related to congestion control, the method performed by a Network Data Analytics Function, NWDAF, and comprising:
receiving (S1201) a request message requesting a Session Management Congestion Control Experience, SMCCE, analytics from a Session Management Function, SMF (420),
wherein the request message includes Data Network Name, DNN, for protocol data unit, PDU, session related to Session Management Congestion Control, SMCC, and/or Single - Network Slice Selection Assistance Information, S-NSSAI, for the PDU session related to the SMCC; and
in response to the request message, transmitting (S1204) a response message including SMCCE analytics information including list of User Equipments, UEs, (100) classified based on experience level of the SMCC to the SMF,
wherein list of the UEs (100) classified based on experience level of the SMCC includes one or more than one of a list of high-experienced UEs (100) whose experience level of the SMCC for the DNN and/or the S-NSSAI is high, a list of medium-experienced UEs (100) whose experience level of the SMCC for the DNN and/or the S-NSSAI is medium, or a list of low-experienced UEs (100) whose experience level of the SMCC for the DNN and/or the S-NSSAI is low.

9. The method of claim 8,
wherein the SMCCE analytics information is used to apply session management congestion control.

10. The method of claim 8, further comprising:
collecting data related to the SMCCE analytics, for the SMCCE analytics information.

11. The method of claim 10, further comprising:
determining the SMCCE analytics information based on the collected data.

12. The method of claim 8,
wherein the request message further includes one or more information among an Analytics ID set to "Session Management Congestion Control Experience", a Target of Analytics Reporting that includes one or more SUPIs, or an Analytics target period.

## Patentansprüche

1. Verfahren zur Durchführung von Kommunikation im Zusammenhang mit Überlastungssteuerung, wobei das Verfahren von einer SMF (Session Management Function, Sitzungsmanagementfunktion) (420) durchgeführt wird und umfasst:
Senden (S1101, S1201) einer Anforderungsnachricht für SMCCE (Session Management Congestion Control Experience, Erfahrung mit Sitzungsmanagement-Überlastungssteuerung) -Analytik an eine NWDAF (Network Data Analytics Function, Netzdatenanalytikfunktion),
wobei die Anforderungsnachricht einen DNN (Data Network Name, Datennetzname) für die PDU (Protocol Data Unit, Protokolldateneinheit) im Zusammenhang mit SMCC (Session Management Congestion Control, Sitzungsmanagement-Überlastungssteuerung) und/oder S-NSSAI (Single-Network Slice Selection Assistance Information, Einzeln - Netzschichtauswahlhilfeinformationen), für die PDU-Sitzung im Zusammenhang mit der SMCC enthält; und
Empfangen (S1102, S1204) einer Antwortnachricht, die SMCCE-Analytikinformationen einschließlich einer Liste von Benutzerausrüstungen, UE (User Equipment), (100) enthält, die basierend auf der Erfahrungsstufe der SMCC klassifiziert sind, als Reaktion auf die Anforderungsnachricht von der NWDAF,
wobei die Liste der UE (100), die basierend auf der Erfahrungsstufe der SMCC klassifiziert sind, eine oder mehrere der folgenden beinhaltet: eine Liste von UE (100) mit hoher Erfahrung, deren Erfahrungsstufe der SMCC für den DNN und/oder die S-NSSAI hoch ist, eine Liste von UE (100) mit mittlerer Erfahrung, deren Erfahrungsstufe der SMCC für den DNN und/oder die S-NSSAI mittel ist, oder eine Liste von UE (100) mit geringer Erfahrung, deren Erfahrungsstufe der SMCC für den DNN und/oder die S-NSSAI niedrig ist.

2. Verfahren nach Anspruch 1, ferner umfassend:
Anwenden der Sitzungsmanagement-Überlastungssteuerung basierend auf den SMCCE-Analytikinformationen.

3. Verfahren nach Anspruch 2, wobei das Anwenden der Sitzungsmanagement-Überlastungssteuerung ferner umfasst: Bestimmen eines Backoff-Zeitgeberwertes, der einer oder mehreren UE (100) bereitgestellt werden soll, auf die die Sitzungsmanagement-Überlastungssteuerung angewendet werden soll, basierend auf den SMCCE-Analytikinformationen.

4. Verfahren nach Anspruch 3,
wobei der Backoff-Zeitgeberwert, der einer oder mehreren UE (100) bereitgestellt werden soll, danach bestimmt wird, in welcher Liste die eine oder mehreren UE (100) enthalten sind, aus der Liste der UE (100) mit hoher SMCC-Erfahrung, der Liste der UE (100) mit mittlerer SMCC-Erfahrung bzw. der Liste der UE (100) mit niedriger SMCC-Erfahrung.

5. Verfahren nach Anspruch 1,
wobei es sich bei den SMCCE-Analytikinformationen um Informationen handelt, die von der NWDAF basierend auf Eingangsdaten, die durch die NWDAF erfasst wurden, bestimmt werden.

6. Verfahren nach Anspruch 1,
wobei die Anforderungsnachricht ferner eine oder mehrere Informationen von einer Analytik-ID, die auf "Session Management Congestion Control Experience" (Erfahrung mit Sitzungsmanagement-Überlastungssteuerung) eingestellt ist, einem Ziel der Analytik-Berichterstellung, das eine oder mehrere SUPIs enthält, oder einem Analytik-Zielzeitraum beinhaltet.

7. Sitzungsmanagementfunktion, SMF, (420) zur Durchführung von Kommunikation im Zusammenhang mit Überlastungssteuerung, wobei die SMF (420) umfasst:
wenigstens einen Prozessor; und
wenigstens einen Speicher zum Speichern von Anweisungen, der elektrisch betriebsfähig mit dem wenigstens einen Prozessor verbunden werden kann;
wobei Operationen, die basierend auf der Ausführung der Anweisungen durch den wenigstens einen Prozessor durchgeführt werden, umfassen:
Senden (S1101, S1201) einer Anforderungsnachricht für SMCCE (Session Management Congestion Control Experience, Erfahrung mit Sitzungsmanagement-Überlastungssteuerung) -Analytik an eine NWDAF (Network Data Analytics Function, Netzdatenanalytikfunktion),
wobei die Anforderungsnachricht einen DNN (Data Network Name, Datennetzname) für die PDU (Protocol Data Unit, Protokolldateneinheit) im Zusammenhang mit SMCC (Session Management Congestion Control, Sitzungsmanagement-Überlastungssteuerung) und/oder S-NSSAI (Single-Network Slice Selection Assistance Information, Einzeln - Netzschichtauswahlhilfeinformationen), für die PDU-Sitzung im Zusammenhang mit der SMCC enthält; und Empfangen (S1102, S1204) einer Antwortnachricht, die SMCCE-Analytikinformationen einschließlich einer Liste von Benutzerausrüstungen, UE (User Equipment), (100) enthält, die basierend auf der Erfahrungsstufe der SMCC klassifiziert sind, als Reaktion auf die Anforderungsnachricht von der NWDAF,
wobei die Liste der UE (100), die basierend auf der Erfahrungsstufe der SMCC klassifiziert sind, eine oder mehrere der folgenden beinhaltet: eine Liste von UE (100) mit hoher Erfahrung, deren Erfahrungsstufe der SMCC für den DNN und/oder die S-NSSAI hoch ist, eine Liste von UE (100) mit mittlerer Erfahrung, deren Erfahrungsstufe der SMCC für den DNN und/oder die S-NSSAI mittel ist, oder eine Liste von UE (100) mit geringer Erfahrung, deren Erfahrungsstufe der SMCC für den DNN und/oder die S-NSSAI niedrig ist.

8. Verfahren zur Durchführung von Kommunikation im Zusammenhang mit Überlastungssteuerung, wobei das Verfahren von einer NWDAF (Network Data Analytics Function, Netzwerkdaten-Analytikfunktion) durchgeführt wird und umfasst:
Empfangen (S1201) einer Anforderungsnachricht für SMCCE (Session Management Congestion Control Experience, Erfahrung mit Sitzungsmanagement-Überlastungssteuerung) -Analytik von einer SMF (Session Management Function, Sitzungsmanagentfunktion) (420),
wobei die Anforderungsnachricht einen DNN (Data Network Name, Datennetzname) für die PDU (Protocol Data Unit, Protokolldateneinheit) im Zusammenhang mit SMCC (Session Management Congestion Control, Sitzungsmanagement-Überlastungssteuerung) und/oder S-NSSAI (Single-Network Slice Selection Assistance Information, Einzeln - Netzschichtauswahlhilfeinformationen), für die PDU-Sitzung im Zusammenhang mit der SMCC enthält; und
als Reaktion auf die Anforderungsnachricht, Übertragen (S1204) einer Antwortnachricht mit SMCCE-Analytikinformationen einschließlich einer Liste von Benutzerausrüstungen, UE, (100), die basierend auf der Erfahrungsstufe der SMCC klassifiziert sind, an die SMF, wobei die Liste der UE (100), die basierend auf der Erfahrungsstufe der SMCC klassifiziert sind, eine oder mehrere der folgenden beinhaltet: eine Liste von UE (100) mit hoher Erfahrung, deren Erfahrungsstufe der SMCC für den DNN und/oder die S-NSSAI hoch ist, eine Liste von UE (100) mit mittlerer Erfahrung, deren Erfahrungsstufe der SMCC für den DNN und/oder die S-NSSAI mittel ist, oder eine Liste von UE (100) mit geringer Erfahrung, deren Erfahrungsstufe der SMCC für den DNN und/oder die S-NSSAI niedrig ist.

9. Verfahren nach Anspruch 8,
wobei die SMCCE-Analytikinformationen verwendet werden, um die Sitzungsmanagement-Überlastungssteuerung anzuwenden.

10. Verfahren nach Anspruch 8, ferner umfassend:
Erfassen von Daten im Zusammenhang mit der SMCCE-Analytik, für die SMCCE-Analytikinformationen.

11. Verfahren nach Anspruch 10, ferner umfassend:
Bestimmen der SMCCE-Analytikinformationen basierend auf den gesammelten Daten.

12. Verfahren nach Anspruch 8,
wobei die Anforderungsnachricht ferner eine oder mehrere Informationen von einer Analytik-ID, die auf "Session Management Congestion Control Experience" (Erfahrung mit Sitzungsmanagement-Überlastungssteuerung) eingestellt ist, einem Ziel der Analytik-Berichterstellung, das eine oder mehrere SUPIs enthält, oder einem Analytik-Zielzeitraum beinhaltet.

## Revendications

1. Procédé de communication lié à un contrôle de congestion, le procédé étant exécuté par une fonction de gestion de session, SMF, (420) et comprenant les étapes suivantes :
transmettre (S1101, S1201) un message de demande d'analyse d'expérience de contrôle de congestion de gestion de session, SMCCE, à la fonction d'analyse de données de réseau, NWDAF,
dans lequel le message de demande comprend un nom de réseau de données, DNN, pour la session d'unité de données de protocole, PDU, liée au contrôle de congestion de gestion de session, SMCC, et/ou une information d'assistance à la sélection d'une tranche de réseau unique, S-NSSAI, pour la session PDU liée au SMCC ; et
recevoir (S1102, S1204) un message de réponse comprenant des informations d'analyse SMCCE, y compris une liste d'équipements utilisateur, UE, (100) classés sur la base du niveau d'expérience du SMCC, en réponse au message de demande de NWDAF,
où la liste des équipements utilisateur (100) classés sur la base du niveau d'expérience du CCSM comprend une ou plusieurs des listes suivantes : une liste d'équipements utilisateur (100) très expérimentés dont le niveau d'expérience du CCSM pour le DNN et/ou les S-NSSAI est élevé, une liste d'équipements utilisateur (100) moyennement expérimentés dont le niveau d'expérience du CCSM pour le DNN et/ou les S-NSSAI est moyen, ou une liste d'équipements utilisateur (100) peu expérimentés dont le niveau d'expérience du CCSM pour le DNN et/ou les S-NSSAI est faible.

2. Procédé selon la revendication 1, comportant en outre l'étape suivante :
appliquer un contrôle de congestion de gestion de session, sur la base des informations d'analyse SMCCE.

3. Procédé selon la revendication 2, dans lequel l'application du contrôle de congestion de gestion de session comprend en outre l'étape suivante :
déterminer une valeur de temporisateur de backoff à fournir à un ou plusieurs UE (100) auxquels le contrôle de congestion de gestion de session doit être appliqué, sur la base des informations d'analyse SMCCE.

4. Procédé selon la revendication 3,
dans lequel la valeur du temporisateur de backoff à fournir à un ou plusieurs UE (100) est déterminée en fonction de la liste dans laquelle les un ou plusieurs UE (100) sont inclus parmi la liste des UE (100) ayant une expérience SMCC élevée, la liste des UE (100) ayant une expérience SMCC moyenne, ou la liste des UE (100) ayant une expérience SMCC faible, respectivement.

5. Procédé selon la revendication 1,
dans lequel les informations d'analyse SMCCE sont des informations déterminées par la NWDAF sur la base des données d'entrée collectées par la NWDAF.

6. Procédé selon la revendication 1,
dans lequel le message de demande comprend en outre une ou plusieurs informations parmi un identifiant d'analyse, Analytics ID, défini sur Expérience de contrôle de congestion de gestion de session, Session Management Congestion Control Experience, une cible de rapport d'analyse comprenant un ou plusieurs SUPI, ou une période cible d'analyse.

7. Fonction de gestion de session, SMF, (420) permettant d'effectuer des communications liées au contrôle de congestion, où la fonction SMF (420) comprend :
au moins un processeur ; et
au moins une mémoire pour stocker des instructions et pouvant être connectée électriquement et fonctionnellement à l'au moins un processeur ;
les opérations mises en œuvre sur la base de l'exécution des instructions par l'au moins un processeur incluant les étapes suivantes :
transmettre (S1101, S1201) un message de demande d'analyse d'expérience de contrôle de congestion de gestion de session, SMCCE, à la fonction d'analyse de données de réseau, NWDAF,
où le message de demande comprend un nom de réseau de données, DNN, pour la session d'unité de données de protocole, PDU, liée au contrôle de congestion de gestion de session, SMCC, et/ou une information d'assistance à la sélection d'une tranche de réseau unique, S-NSSAI, pour la session PDU liée au SMCC ; et
recevoir (S1102, S1204) un message de réponse comprenant des informations d'analyse SMCCE, y compris une liste d'équipements utilisateur, UE, (100) classés sur la base du niveau d'expérience du SMCC, en réponse au message de demande de NWDAF,
où la liste des équipements utilisateur (100) classés sur la base du niveau d'expérience du CCSM comprend une ou plusieurs des listes suivantes : une liste d'équipements utilisateur (100) très expérimentés dont le niveau d'expérience du CCSM pour le DNN et/ou les S-NSSAI est élevé, une liste d'équipements utilisateur (100) moyennement expérimentés dont le niveau d'expérience du CCSM pour le DNN et/ou les S-NSSAI est moyen, ou une liste d'équipements utilisateur (100) peu expérimentés dont le niveau d'expérience du CCSM pour le DNN et/ou les S-NSSAI est faible.

8. Procédé pour effectuer une communication liée au contrôle de congestion, le procédé étant exécuté par une fonction d'analyse de données de réseau, NWDAF, et comprenant les étapes suivantes :
recevoir (S1201) un message de demande demandant une analyse d'expérience de contrôle de congestion de gestion de session, SMCCE, de en provenance d'une fonction de gestion de session, SMF, (420),
où le message de demande comprend un nom de réseau de données, DNN, pour la session d'unité de données de protocole, PDU, liée au contrôle de congestion de gestion de session, SMCC, et/ou une information d'assistance à la sélection d'une tranche de réseau unique, S-NSSAI, pour la session PDU liée au SMCC ; et
en réponse au message de demande, transmettre (S1204), à la SMF, un message de réponse comprenant des informations d'analyse SMCCE, y compris une liste d'équipements utilisateur (100) classés en fonction du niveau d'expérience du SMCC,
où la liste des équipements utilisateur (100) classés sur la base du niveau d'expérience du CCSM comprend une ou plusieurs des listes suivantes : une liste d'équipements utilisateur (100) très expérimentés dont le niveau d'expérience du CCSM pour le DNN et/ou les S-NSSAI est élevé, une liste d'équipements utilisateur (100) moyennement expérimentés dont le niveau d'expérience du CCSM pour le DNN et/ou les S-NSSAI est moyen, ou une liste d'équipements utilisateur (100) peu expérimentés dont le niveau d'expérience du CCSM pour le DNN et/ou les S-NSSAI est faible.

9. Procédé selon la revendication 8,
dans lequel les informations d'analyse SMCCE sont utilisées pour appliquer un contrôle de congestion de gestion de session.

10. Procédé selon la revendication 8, comprenant en outre l'étape suivante :
collecter des données relatives à l'analyse SMCCE, pour les informations d'analyse SMCCE.

11. Procédé selon la revendication 10, comprenant en outre l'étape suivante :
déterminer les informations d'analyse SMCCE sur la base des données collectées.

12. Procédé selon la revendication 8,
dans lequel le message de demande comprend en outre une ou plusieurs informations parmi un identifiant d'analyse, Analytics ID, défini sur Expérience de contrôle de congestion de gestion de session, Session Management Congestion Control Experience, une cible de rapport d'analyse comprenant un ou plusieurs SUPI, ou une période cible d'analyse.
